# EUROPEAN PATENT APPLICATION

(11) **EP 4 435 924 A1**
(43) Date of publication of application: **25.09.2024**
(21) Application number: 22895162.0
(22) Date of filing: 02.08.2022
(51) Int. Cl.: H01M 10/0585, H01M 10/0562, H01M 50/124, H01M 50/131

(54) **BATTERY, METHOD FOR PRODUCING BATTERY, AND CIRCUIT BOARD**

(30) Priority: 19.11.2021 JP 2021188282
(71) Applicant: Panasonic Intellectual Property Management Co., Ltd., Osaka-shi, Osaka 540-6207 (JP)
(72) Inventor: HONDA, Kazuyoshi, Kadoma-shi, Osaka 571-0057 (JP); KAWASE, Akira, Kadoma-shi, Osaka 571-0057 (JP); MORIOKA, Kazuhiro, Kadoma-shi, Osaka 571-0057 (JP); HIRANO, Koichi, Kadoma-shi, Osaka 571-0057 (JP); KOSHIZUKA, Tsutomu, Kadoma-shi, Osaka 571-0057 (JP); KOGA, Eiichi, Kadoma-shi, Osaka 571-0057 (JP)
(74) Representative: Grünecker Patent- und Rechtsanwälte PartG mbB
(86) International application number: PCT/JP2022/029613
(87) International publication number: WO 2023/089874

(57) **Abstract**

A battery of the present disclosure includes a power generation element having a plurality of unit cells which are laminated. Each of the plurality of unit cells includes an electrode layer, a counter electrode layer, and a solid electrolyte layer arranged between the electrode layer and the counter electrode layer. The power generation element includes a first principal, a second principal opposite to the first principal, and a side surface connecting the first principal and the second principal. The side surface includes: a first inclined surface that connects to the first principal and forms an obtuse angle with the first principal; and a second inclined surface that connects to the second principal and forms an obtuse angle with the second principal. At least one of the first inclined surface and the second inclined surface is provided across two or more of the plurality of unit cells.

## Description

### Technical Field

The present disclosure relates to a battery, a method for manufacturing a battery, and a circuit substrate.

### Background Art

Patent Literature 1 discloses a laminated battery widening toward the top or the bottom within a battery case. Patent Literature 2 discloses an all-solid battery having a shape with at least a part of edges chamfered.

### Citation List

### Patent Literature

PTL 1: Japanese Unexamined Patent Application Publication (Translation of PCT application) No. 2014-532262
PTL 2: Japanese Unexamined Patent Application Publication No. 2015-50153

### Summary of Invention

### Technical Problem

Batteries have been required to further improve their battery characteristics.

The present disclosure provides a high-performance battery, a method for manufacturing the battery, and a circuit substrate.

### Solution to Problem

A battery according to an aspect of the present disclosure includes a power generation element having a plurality of unit cells which are laminated. Each of the plurality of unit cells includes an electrode layer, a counter electrode layer, and a solid electrolyte layer arranged between the electrode layer and the counter electrode layer. The power generation element includes: a first principal; a second principal opposite to the first principal; and a side surface connecting the first principal and the second principal. The side surface includes: a first inclined surface that connects to the first principal and forms an obtuse angle with the first principal; and a second inclined surface that connects to the second principal and forms an obtuse angle with the second principal. At least one of the first inclined surface and the second inclined surface is provided across two or more of the plurality of unit cells.

A method for manufacturing a battery according to another aspect of the present disclosure includes the steps of: forming in a side surface of a power generation element including a plurality of unit cells which are laminated, a first inclined surface connecting to a first principal of the power generation element; and forming in the side surface of the power generation element, a second inclined surface connecting to a second principal opposite to the first principal. The first inclined surface forms an obtuse angle with the first principal. The second inclined surface forms an obtuse angle with the second principal. At least one of the first inclined surface and the second inclined surface is provided across two or more of the plurality of unit cells.

A circuit substrate according to still another aspect of the present disclosure includes: a power generation element including a plurality of unit cells which are laminated; and a circuit pattern layer laid on the power generation element. Each of the plurality of unit cells includes an electrode layer, a counter electrode layer, and a solid electrolyte layer arranged between the electrode layer and the counter electrode layer. The power generation element includes: a first principal; a second principal opposite to the first principal; and a side surface connecting the first principal and the second principal. The side surface includes a first inclined surface that connects to the first principal and forms an obtuse angle with the first principal, and a second inclined surface that connects to the second principal and forms an obtuse angle with the second principal. At least one of the first inclined surface and the second inclined surface is provided across two or more of the plurality of unit cells.

### Advantageous Effects of Invention

According to the present disclosure, it is possible to provide a high-performance battery, a method for manufacturing the battery, and a circuit substrate.

### Brief Description of Drawings

[Fig. 1A] Fig. 1A is a sectional view of a battery according to Embodiment 1.
[Fig. 1B] Fig. 1B is another sectional view of the battery according to Embodiment 1.
[Fig. 2] Fig. 2 is a top view of the battery according to Embodiment 1.
[Fig. 3A] Fig. 3A is a sectional view of an example unit cell used in the laminate of a power generation element according to Embodiment 1.
[Fig. 3B] Fig. 3B is a sectional view of another example unit cell used in the laminate of the power generation element according to Embodiment 1.
[Fig. 3C] Fig. 3C is a sectional view of still another example unit cell used in the laminate of the power generation element according to Embodiment 1.
[Fig. 4A] Fig. 4A is a sectional view for explaining a problem of a battery according to a comparative example.
[Fig. 4B] Fig. 4B is a sectional view for explaining operation effects of the battery according to Embodiment 1.
[Fig. 5] Fig. 5 is a graph illustrating a result of approximate calculation of flexural strength to the thickness of the power generation element according to Embodiment 1.
[Fig. 6] Fig. 6 is a graph illustrating a result of approximate calculation of insulation distance to inclination angle according to Embodiment 1.
[Fig. 7A] Fig. 7A is a sectional view of a battery according to Embodiment 2.
[Fig. 7B] Fig. 7B is a sectional view of the battery according to Embodiment 2.
[Fig. 8] Fig. 8 is a sectional view of an example of a battery according to Embodiment 3.
[Fig. 9] Fig. 9 is a sectional view of another example of the battery according to Embodiment 3.
[Fig. 10] Fig. 10 is a sectional view of still another example of the battery according to Embodiment 3.
[Fig. 11A] Fig. 11A is a sectional view of a battery according to Embodiment 4.
[Fig. 11B] Fig. 11B is a sectional view of the battery according to Embodiment 4.
[Fig. 12A] Fig. 12A is a sectional view of a battery according to Embodiment 5.
[Fig. 12B] Fig. 12B is a sectional view of the battery according to Embodiment 5.
[Fig. 13A] Fig. 13A is a sectional view of a battery according to Embodiment 6.
[Fig. 13B] Fig. 13B is a sectional view of the battery according to Embodiment 6.
[Fig. 14] Fig. 14 is a sectional view of another example of the battery according to Embodiment 6.
[Fig. 15] Fig. 15 is a sectional view of a battery according to Embodiment 7.
[Fig. 16] Fig. 16 is a bottom view of the battery according to Embodiment 7.
[Fig. 17] Fig. 17 is a sectional view of another example of the battery according to Embodiment 7.
[Fig. 18] Fig. 18 is a sectional view of a circuit substrate according to Embodiment 8.
[Fig. 19A] Fig. 19A is a flowchart illustrating an example of the method for manufacturing a battery according to the embodiments.
[Fig. 19B] Fig. 19B is a flowchart illustrating another example of the method for manufacturing a battery according to the embodiments.

### Description of Embodiments

### (Outline of Present Disclosure)

A battery according to an aspect of the present disclosure includes a power generation element having a plurality of unit cells which are laminated. Each of the plurality of unit cells includes an electrode layer, a counter electrode layer, and a solid electrolyte layer arranged between the electrode layer and the counter electrode layer. The power generation element includes: a first principal; a second principal opposite to the first principal; and a side surface connecting the first principal and the second principal. The side surface includes: a first inclined surface that connects to the first principal and forms an obtuse angle with the first principal; and a second inclined surface that connects to the second principal and forms an obtuse angle with the second principal. At least one of the first inclined surface and the second inclined surface is provided across two or more of the plurality of unit cells.

This can implement an all-solid-state battery of high energy-density. Specifically, the plurality of unit cells which are laminated can implement a high-capacity or high-voltage battery with a very small thickness.

The side surface includes the first inclined surface connecting to the first principal, so that external force applied to the edge of the first principal can be supported by the plurality of unit cells for which the first inclined surface is provided. This can prevent external force applied to the edge of the power generation element from concentrating locally in a specific area, thus preventing the power generation element from breaking. In the battery according to this aspect, the side surface further includes the second inclined surface, which connects to the second principal, so that external force applied to the edge of the second principal can be also supported by plurality of unit cells. That is, the ability of supporting external force applied to the edges of both the upper and lower surfaces of the power generation element can more strongly prevent the power generation element from breaking.

Furthermore, the inclusion of the first inclined surface and the second inclined surface in the side surface can ensure long insulation distance as creepage distance between the electrode layer and the counter electrode layer. This can prevent short circuits from occurring even when the power generation element partially breaks.

In the battery according to this aspect, each of the first inclined surface and the second inclined surface is provided across two or more unit cells. This can implement sufficient support of external force and ensure sufficient insulation distance, thus enhancing the reliability of the battery according to this aspect.

For example, the side surface may include a surface perpendicular to the first principal or the second principal.

External force applied to the side surface from the front, that is, applied from the side of the power generation element can be therefore received by the surface perpendicular to the principal. This can prevent the power generation element from breaking, thus enhancing the reliability of the battery.

For example, the shape of the power generation element in a section perpendicular to the first principal, the second principal, and the side surface is an octagon.

This can equalize the size of the unit cells in middle part of the power generation element in the thickness direction, thus reducing differences in capacitance among the unit cells.

For example, the shape of the power generation element in a section perpendicular to the first principal, the second principal, and the side surface is a hexagon.

The first inclined surface and the second inclined surface can thereby be made large. This can implement sufficient support of external force and ensure longer insulation distance. Thus, the reliability of the battery can be further enhanced.

For example, the first principal and the second principal are polygonal in plan view. At least one of the first inclined surface and the second inclined surface may be provided along two or more sides of the first principal or the second principal.

At least one of the first inclined surface and the second inclined surface can thereby be provided in a wide area, thus increasing the area that can support external force and the area that can ensure sufficient insulation distance. This can further enhance the reliability of the battery.

For example, at least one of the first inclined surface and the second inclined surface may be provided along the entire circumference of the first principal or the second principal.

At least one of the first inclined surface and the second inclined surface can thereby be provided in a wider range, thus further increasing the area that can support external force and the area that can ensure sufficient insulation distance. This can further enhance the reliability of the battery.

For example, the battery according to an aspect of the present disclosure may include an extraction terminal provided for the first principal or the second principal.

This can improve the mountability of the battery.

For example, the battery according to an aspect of the present disclosure may include an insulating member coating the side surface.

This can provide protection for the side surface of the power generation element, thus preventing break at edges and short circuits.

For example, the insulating member may contain resin.

This can enhance the impact resistance of the battery. Furthermore, it is possible to reduce the stress applied to the battery due to varying temperature of the battery or expansion and contraction of the battery during charging and discharging.

For example, the insulating member may have a coating thickness smaller than or equal to the thickness of the power generation element.

This can prevent the battery from increasing in volume, thus increasing the energy density.

For example, a part of the insulating member may be positioned outside the thickness range of the power generation element.

When an object is going to hit the first principal or the second principal, the insulating member can receive the object. This can reduce the risk of an object directly hitting the power generation element, thereby allowing for reducing the possibility of the battery breaking. Thus, the reliability of the battery can be enhanced.

For example, the insulating member may coat the first principal or the second principal.

When force is applied to the insulating member in the laminating direction, the insulating member is caught by any principal and can be prevented from falling off. Therefore, the edges of the power generation element can be prevented from collapsing due to the insulating member falling off. Thus, the reliability of the battery can be enhanced.

For example, the plurality of unit cells may be electrically coupled in series.

This can implement a high-voltage battery.

For example, the plurality of unit cells may be electrically coupled in parallel.

This can implement a high-capacity battery.

For example, the battery according to an aspect of the present disclosure may include: an electrode insulating member covering the electrode layer of each of the plurality of unit cells in a first region of the side surface; a counter electrode extraction part that covers the electrode insulating member and is electrically coupled to the counter electrode layer of each of the plurality of unit cells; a counter electrode insulating member covering the counter electrode layer of each of the plurality of unit cells in a second region of the side surface; and an electrode extraction part that covers the counter electrode insulating member and is electrically coupled to the electrode layer of each of the plurality of unit cells.

The electrode extraction part and the counter electrode extraction part are individually provided along the side surface of the power generation element. It is therefore possible to implement with a small volume, a configuration that couples the unit cells in parallel and extracts the positive and negative electrodes. Thus, the energy density of the battery can be increased.

For example, the battery according to an aspect of the present disclosure may include a flexible container, an electrode current collector terminal electrically coupled to the electrode layer of each of the plurality of unit cells, and a counter electrode current collector terminal electrically coupled to the counter electrode layer of each of the plurality of unit cells. The power generation element is sealed within the flexible container. The electrode current collector terminal is in contact with the electrode extraction part, the first principal, or the second principal and extends out of the flexible container. The counter electrode current collector terminal is in contact with the counter electrode extraction part, the first principal, or the second principal and extends out of the flexible container.

This allows for extraction of the positive electrode and the negative electrode through the current collector terminal. Furthermore, even when the power generation element comes into contact with the inner surface of the flexible container during the process of sealing the power generation element into the flexible container, during use after the sealing, or the like, force applied to the edge of the first or second principal of the power generation element can be properly supported. It is therefore possible to prevent break and short circuits of the power generation element. Thus, the reliability of the battery can be enhanced.

For example, the battery according to an aspect of the present disclosure may include a flexible container. The power generation element is sealed within the flexible container.

Even when the power generation element comes into contact with the inner surface of the flexible container during the process of sealing the power generation element into the flexible container, during use after the sealing, or the like, force applied to the edge of the first or second principal of the power generation element can be properly supported. It is therefore possible to prevent break and short circuits of the power generation element. Thus, the reliability of the battery can be enhanced.

For example, the flexible container may be a moisture-proof laminated bag.

The power generation element can thereby be protected from moisture. This can enhance the reliability of the battery.

A method for manufacturing a battery according to an aspect of the present disclosure includes the steps of: forming in a side surface of a power generation element including a plurality of unit cells which are laminated, a first inclined surface connecting to a first principal of the power generation element; and forming in the side surface of the power generation element, a second inclined surface connecting to a second principal opposite to the first principal. The first inclined surface forms an obtuse angle with the first principal. The second inclined surface forms an obtuse angle with the second principal. At least one of the first inclined surface and the second inclined surface is provided across two or more of the plurality of unit cells.

It is therefore possible to manufacture the aforementioned high-performance battery.

A circuit substrate according to still another aspect of the present disclosure includes: a power generation element including a plurality of unit cells which are laminated; and a circuit pattern layer laid on the power generation element. Each of the plurality of unit cells includes an electrode layer, a counter electrode layer, and a solid electrolyte layer arranged between the electrode layer and the counter electrode layer. The power generation element includes: a first principal; a second principal opposite to the first principal; and a side surface connecting the first principal and the second principal. The side surface includes a first inclined surface that connects to the first principal and forms an obtuse angle with the first principal, and a second inclined surface that connects to the second principal and forms an obtuse angle with the second principal. At least one of the first inclined surface and the second inclined surface is provided across two or more of the plurality of unit cells.

The circuit substrate itself can therefore charge and discharge, thus implementing the function as a battery.

Hereinafter, embodiments will be specifically described with reference to the drawings.

The embodiments described below illustrate comprehensive or specific examples. The numerical values, shapes, materials, constituent elements, arrangements and connections of the constituent elements, steps, orders of the steps, and the like that are illustrated in the following embodiments are just examples and do not limit the present disclosure. Among the constituent elements in the following embodiments, the constituent elements not described in independent claims are described as optional constituent elements.

Each drawing is schematic and is not necessarily illustrated exactly. For example, scales and the like are not identical in different drawings. In the drawings, substantially the same configurations are given the same reference numerals, and the overlapping description is omitted or simplified.

In the specification, terms representing the relationship between elements, such as "parallel" or "perpendicular", terms representing the shape of elements, such as "rectangle" or "cuboid", and the numerical ranges are not expressions that represent only strict meanings but are expressions that represent substantially equivalent ranges, for example, including several percent differences.

In the specification and drawings, the x axis, y axis, and z axis indicate three axes of a three-dimensional orthogonal coordinate system. When the shape of a power generation element of a battery in plan view is a rectangle, the x axis and the y axis correspond to directions parallel to a first side of the rectangle and a second side perpendicular to the first side, respectively. The z axis corresponds to the laminating direction of the plurality of unit cells included in the power generation element.

In this specification, the "laminating direction" corresponds to the normal direction to the principals of the current collectors and active material layers. In the specification, the "plan view" means a view in the direction vertical to the principal of the power generation element unless otherwise noted, for example, when used alone. "Plan view of a certain surface", such as "plan view of a first side surface", is a view of the "certain surface" as seen from the front.

In the specification, the terms "above" and "below" do not indicate the upward direction (vertically upper side) and the downward direction (vertically lower side) in an absolute spatial perception but are used as terms defined by the relative positional relationship based on the order of laminating in the laminating structure. Furthermore, the terms "above" and "below" are applicable to not only the case where two constituent elements are arranged with an interval therebetween and another constituent element is provided between the two constituent elements but also the case where two constituent elements are arranged so as to closely adhere to each other and are in contact with each other. In the following description, the negative direction of the z axis corresponds to "below" or "lower side", and the positive direction of the z axis corresponds to "above" or "upper side".

In the specification, the expression "A is covered" means that at least a part of A is covered. That is, "A is covered" is an expression implying not only "entire A is covered" but also "only a part of A is covered". "A" is, for example, a side surface or a principal of a certain member, such as a layer or a terminal.

In the specification, the ordinal numbers, such as "first" and "second", does not mean the number or the order of constituent elements unless otherwise noted and are used for the purpose of avoiding confusion of the same kind of constituent elements and identifying the constituent elements.

### (Embodiment 1)

Hereinafter, the configuration of a battery according to Embodiment 1 will be described.

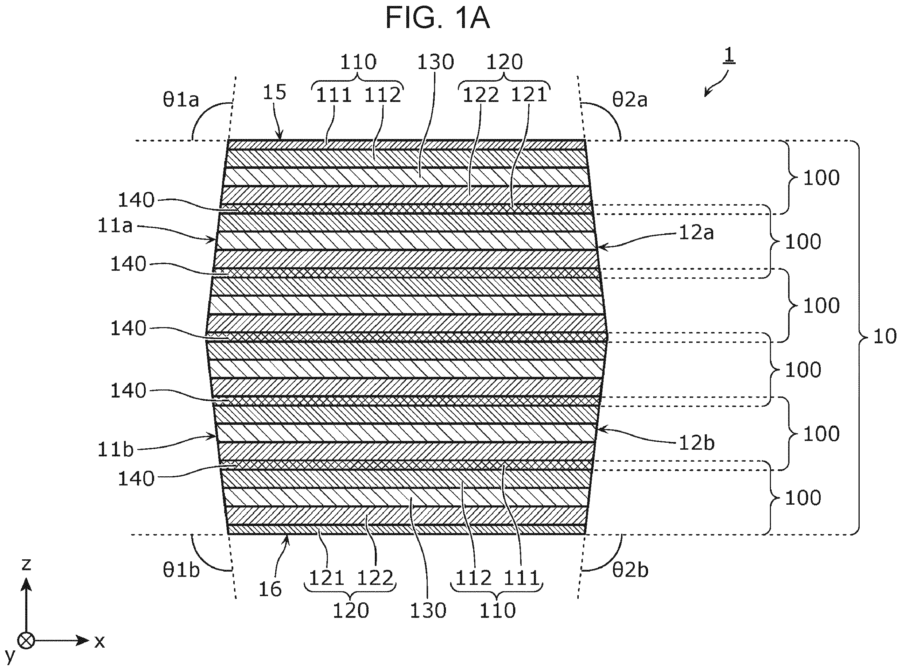

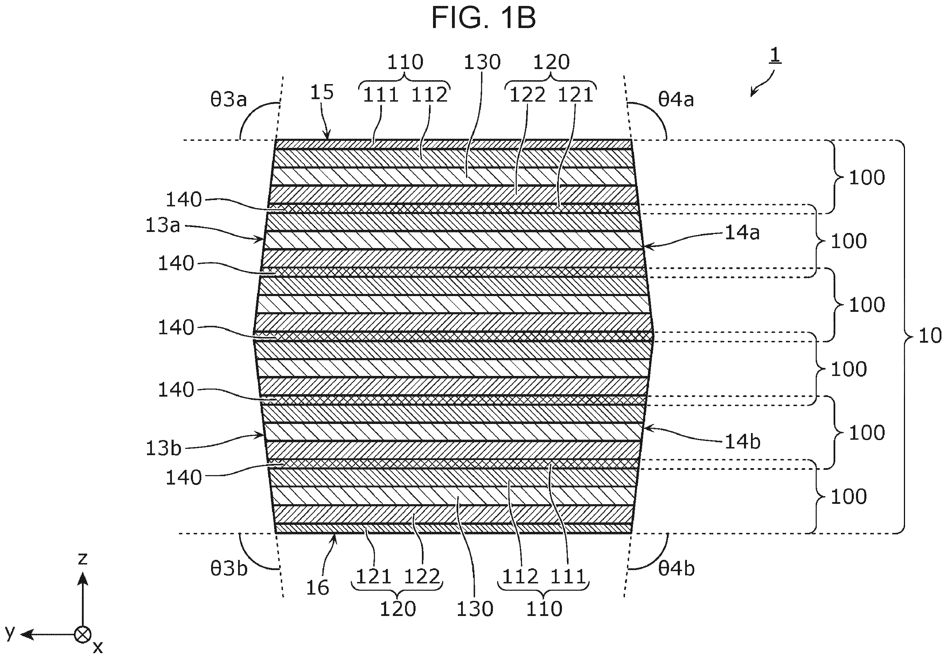

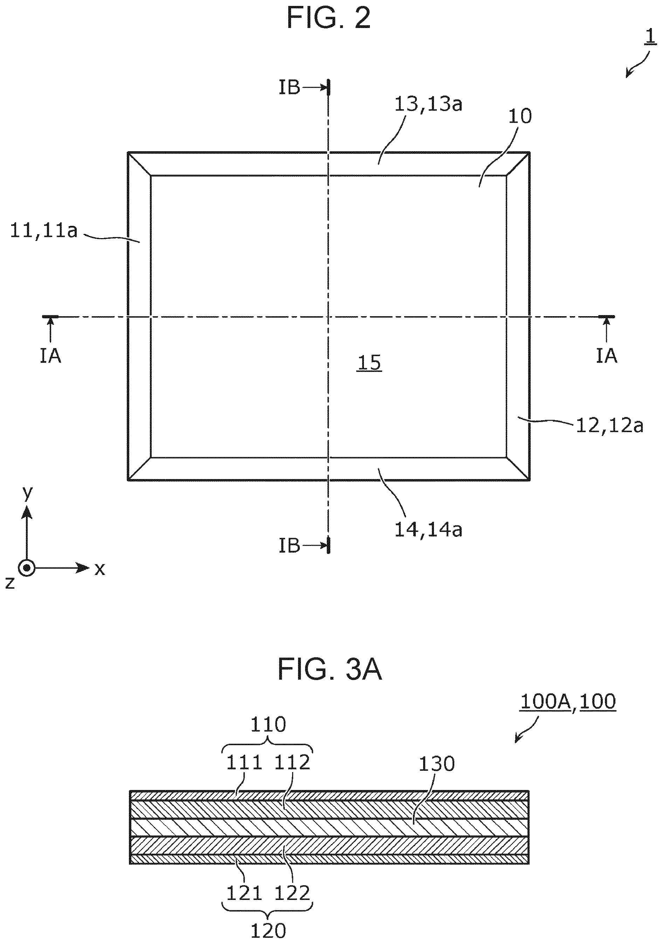

Figs. 1A and 1B are sectional views of a battery 1 according to Embodiment 1. Fig. 2 is a top view of the battery 1 according to Embodiment 1. Fig. 1A illustrates a section along a line IA-IA of Fig. 2. Fig. 1B illustrates a section along a line IB-IB of Fig. 2.

As illustrated in Figs. 1A and 1B, the battery 1 includes a power generation element 10. The battery 1 is, for example, an all-solid-state battery.

The power generation element 10 has a plate-like shape. As illustrated in Fig. 2, for example, the shape of the power generation element 10 in plan view is rectangular. The thickness (that is, the length along the z-axis) of the power generation element 10 is smaller than each side or the maximum width of the principal 15 or 16 of the power generation element 10. The shape of the power generation element 10 in plan view may be another polygonal shape, such as a square, a hexagon, or an octagon or may be a circle or an ellipse. In the sectional views of Figs. 1A and 1B and other drawings, the thickness of each layer is exaggerated for easy understanding of the layer structure of the power generation element 10.

As illustrated in Figs. 1A and 1B, the power generation element 10 includes plurality of unit cells 100 laminated on top of each other. The plurality of unit cells 100 are each plate-shaped and are sequentially laminated along the thickness direction thereof. The plurality of unit cells 100 are electrically coupled in series. The power generation element 10 thereby implements high voltage.

Each of the plurality of unit cells 100 includes an electrode layer 110, a counter electrode layer 120, and a solid electrolyte layer 130. The electrode layer 110 includes an electrode current collector 111 and an electrode active material layer 112. The counter electrode layer 120 includes a counter electrode current collector 121 and a counter electrode active material layer 122. In each unit cell 100, the electrode current collector 111, the electrode active material layer 112, the solid electrolyte layer 130, the counter electrode active material layer 122, and the counter electrode current collector 121 are laminated on top of each other in this order in the thickness direction.

The electrode layer 110 is one of positive and negative electrode layers of the unit cell 100. The counter electrode layer 120 is the other one of the positive and negative electrode layers of the unit cell 100. In the following description, by way of example, the electrode layer 110 is the negative electrode layer while the counter electrode layer 120 is the positive electrode layer.

The electrode current collector 111 and the counter electrode current collector 121 are each a foil-like, plate-like, or net-like conducting member. The electrode current collector 111 and the counter electrode current collector 121 each may be a conductive thin film, for example. The electrode current collector 111 and the counter electrode current collector 121 can be each made of metal, for example, such as stainless (SUS), aluminum (Al), copper (Cu), or nickel (Ni). The electrode current collector 111 and the counter electrode current collector 121 may be made of different materials.

Each thickness of the electrode current collector 111 and the counter electrode current collector 121 is, but not limited to, for example, greater than or equal to 5 µm and smaller than or equal to 100 µm. A principal of the electrode current collector 111 is in contact with the electrode active material layer 112. The electrode current collector 111 may include a current collector layer as a layer that is provided for the portion in contact with the electrode active material layer 112 and contains a conductive material. A principal of the counter electrode current collector 121 is in contact with the counter electrode active material layer 122. The counter electrode current collector 121 may include a current collector layer as a layer that is provided for the portion in contact with the counter electrode active material layer 122 and contains a conductive material.

The electrode active material layer 112 is arranged on the principal of the electrode current collector 111 on the counter electrode layer 120 side. The electrode active material layer 112 contains, for example, a negative electrode active material as an electrode material. The electrode active material layer 112 is arranged facing the counter electrode active material layer 122 with the solid electrolyte layer 130 sandwiched therebetween.

The negative electrode active material to be contained in the electrode active material layer 112 can be a negative electrode active material, for example, such as graphite and metal lithium. The material of the negative electrode active material can include various materials that allow for extraction and insertion of ions of lithium (Li), magnesium (Mg), or the like.

Furthermore, the materials to be contained in the electrode active material layer 112 may include, for example, a solid electrolyte, such as an inorganic solid electrolyte. The inorganic solid electrolyte can be, for example, a sulfide solid electrolyte, an oxide solid electrolyte, or the like. Examples of the sulfide solid electrolyte include a mixture of lithium sulfide (Li₂S) and phosphorous pentasulfide (P₂S₅). The materials to be contained in the electrode active material layer 112 may also include a conductive material, for example, such as acetylene black, or a binder, for example, such as polyvinylidene fluoride.

The electrode active material layer 112 is produced by applying on a principal of the electrode current collector 111, a coating material paste obtained by kneading the materials to be contained in the electrode active material layer 112 with a solvent, followed by drying. After the drying, the electrode layer 110 (also referred to as an electrode plate) including the electrode active material layer 112 and the electrode current collector 111 may be pressed in order to increase the density of the electrode active material layer 112. The thickness of the electrode active material layer 112 is, but not limited to, for example, greater than or equal to 5 µm and smaller than or equal to 300 µm.

The counter electrode active material layer 122 is arranged on the principal of the counter electrode current collector 121 on the electrode layer 110 side. The counter electrode active material layer 122 is a layer containing a positive electrode material, for example, such as an active material. The positive electrode material is a material constituting the counter electrode to the negative electrode material. The counter electrode active material layer 122 contains, for example, a positive electrode active material.

The positive electrode active material to be contained in the counter electrode active material layer 122 can be a positive electrode active material, for example, such as lithium-cobalt composite oxide (LCO), lithium-nickel composite oxide (LNO), lithium-manganese composite oxide (LMO), lithium-manganese-nickel composite oxide (LMNO), lithium-manganese-cobalt composite oxide (LMCO), lithium-nickel-cobalt composite oxide (LNCO), or lithium-nickel-manganese-cobalt composite oxide (LNMCO). The material of the positive electrode active material can include various materials that allow for extraction and insertion of ions of Li, Mg, or the like.

Furthermore, the materials to be contained in the counter electrode active material layer 122 may include, for example, a solid electrolyte, such as an inorganic solid electrolyte. The inorganic solid electrolyte can be, for example, a sulfide solid electrolyte, an oxide solid electrolyte, or the like. Examples of the sulfide solid electrolyte include a mixture of Li₂S and P₂S₅. The surface of the positive electrode active material may be coated with a solid electrolyte. The materials to be contained in the counter electrode active material layer 122 may also include a conductive material, for example, such as acetylene black, or a binder, for example, such as polyvinylidene fluoride.

The counter electrode active material layer 122 is produced by applying on a principal of the counter electrode current collector 121, a coating material paste obtained by kneading the materials to be contained in the counter electrode active material layer 122 with a solvent, followed by drying. After the drying, the counter electrode layer 120 (also referred to as a counter electrode plate) including the counter electrode active material layer 122 and the counter electrode current collector 121 may be pressed in order to increase the density of the counter electrode active material layer 122. The thickness of the counter electrode active material layer 122 is, but not limited to, for example, greater than or equal to 5 µm and smaller than or equal to 300 µm.

The solid electrolyte layer 130 is arranged between the electrode active material layer 112 and the counter electrode active material layer 122. The solid electrolyte layer 130 is in contact with the electrode active material layer 112 and the counter electrode active material layer 122. The solid electrolyte layer 130 is a layer containing an electrolyte material. The electrolyte material can be a publicly-known electrolyte for batteries. The thickness of the solid electrolyte layer 130 may be greater than or equal to 5 µm and smaller than or equal to 300 µm or may be greater than or equal to 5 µm and smaller than or equal to 100 µm.

The solid electrolyte layer 130 contains a solid electrolyte. The solid electrolyte can be a solid electrolyte, for example, such as an inorganic solid electrolyte. The inorganic solid electrolyte can be, for example, a sulfide solid electrolyte, an oxide solid electrolyte, or the like. Examples of the sulfide solid electrolyte include a mixture of Li₂S and P₂S₅. In addition to the electrolyte material, the solid electrolyte layer 130 may contain a binder, for example, such as polyvinylidene fluoride.

In Embodiment 1, the electrode active material layer 112, the counter electrode active material layer 122, and the solid electrolyte layer 130 maintain the parallel-plate shape. This can prevent occurrence of crack or collapse due to bending. The electrode active material layer 112, the counter electrode active material layer 122, and the solid electrolyte layer 130 may be smoothly curved together.

As illustrated in Figs. 1A and 1B, among the plurality of unit cells 100, adjacent unit cells 100 whose layers are arranged in the same order share a current collector. Bipolar current collectors 140, which are illustrated in Figs. 1A and 1B, are collectors each shared by two adjacent unit cells 100. Specifically, each bipolar current collector 140 serves as the counter electrode current collector 121 of the unit cell 100 on the upper side and serves as the electrode current collector 111 of the unit cell 100 on the lower side. That is, the counter electrode active material layer 122 is arranged in contact with the upper surface of each bipolar current collector 140 while the electrode active material layer 112 is arranged in contact with the lower surface of the bipolar current collector 140. By sharing the current collectors, the power generation element 10 can be made thin, and the energy density of the battery 1 can be increased.

Figs. 3A to 3C are sectional views of unit cell examples used in the laminate of the power generation element 10 according to Embodiment 1. The power generation element 10, in which the current collectors are shared as illustrated in Figs. 1A and 1B, is formed by laminating a proper combination of unit cells 100A, 100B, and 100C, which are illustrated in Figs. 3A to 3C, to form a laminate and then cutting the side surface of the laminate.

The unit cell 100A, which is illustrated in Fig. 3A, has a structure in which the electrode current collector 111, the electrode active material layer 112, the solid electrolyte layer 130, the counter electrode active material layer 122, and the counter electrode current collector 121 are laminated in this order like the unit cells 100. In the unit cell 100A, for example, the electrode current collector 111, the electrode active material layer 112, the solid electrolyte layer 130, the counter electrode active material layer 122, and the counter electrode current collector 121 are of the same size and shape. That is, end surfaces of the unit cell 100A are flat.

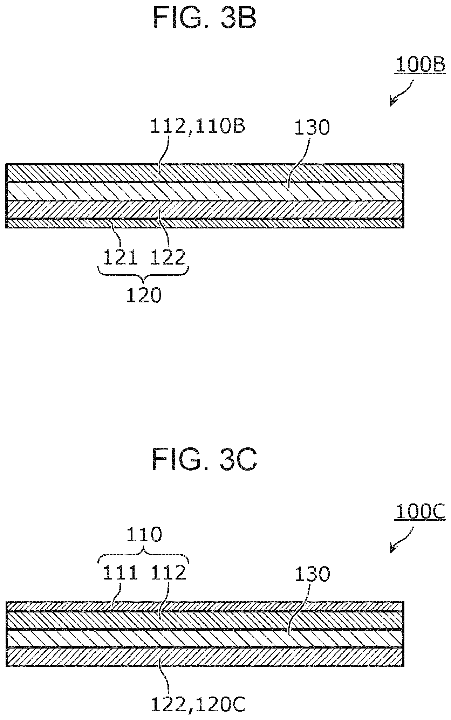

The unit cell 100B, which is illustrated in Fig. 3B, has the same configuration as the unit cell 100A, which is illustrated in Fig. 3A, with the electrode current collector 111 eliminated. That is, an electrode layer 110B of the unit cell 100B is composed of only the electrode active material layer 112.

The unit cell 100C, which is illustrated in Fig. 3C, has the same configuration as the unit cell 100A, which is illustrated in Fig. 3A, with the counter electrode current collector 121 eliminated. That is, a counter electrode layer 120C of the unit cell 100C is composed of only the counter electrode active material layer 122.

In the unit cells 100A, 100B, and 100C before being laminated, the end surfaces of the layers are not necessarily aligned due to differences in size of the layers. That is, each end surface of the unit cells 100A, 100B, and 100C may have irregularities. Dents in the side surfaces of the power generation element 10 can be removed by cutting together the unit cells formed into a laminate.

In Embodiment 1, the side surfaces of the power generation element 10 are not flat and are formed in a barrel-like shape protruding in the middle from the upper and lower ends. That is, each side surface of the power generation element 10 is composed of a curved surface or plurality of flat surfaces that are continuous from the upper end to the lower end so as to protrude outward between the upper and lower ends. The "continuous surfaces" mean that the side surface does not include a step, that is, does not include a surface parallel to the principal 15 or 16.

Hereinafter, the shape of the power generation element 10 will be described in detail. The power generation element 10 includes four side surfaces 11, 12, 13, and 14 and the two principals 15 and 16.

The principal 15 is an example of a first principal. The principal 16 is an example of a second principal opposite to the first principal. The principals 15 and 16 are flat surfaces parallel to each other. The principal 15 is the uppermost surface of the power generation element 10. The principal 16 is the lowermost surface of the power generation element 10. Each area of the principals 15 and 16 is larger than the side surfaces 11, 12, 13, and 14.

Each of the side surfaces 11, 12, 13, and 14 is a surface connecting the principal 15 and the principal 16. The side surface 11 and the side surface 12 are opposite to each other. The side surface 13 and the side surface 14 are opposite to each other. The side surfaces 11, 12, 13, and 14 are cut surfaces formed by cutting the laminate of plurality of unit cells 100.

In Embodiment 1, the side surfaces of the power generation element 10 includes first inclined surfaces arranged along the entire circumference of the principal 15 and second inclined surfaces provided along the entire circumference of the principal 16. That is, the side surfaces 11, 12, 13, and 14 each include a first inclined surface and a second inclined surface. Specifically, as illustrated in Fig. 1A, the side surface 11 includes inclined surfaces 11a and 11b. The side surface 12 includes inclined surfaces 12a and 12b. As illustrated in Fig. 1B, the side surface 13 includes inclined surfaces 13a and 13b. The side surface 14 includes inclined surfaces 14a and 14b.

The inclined surfaces 11a, 12a, 13a, and 14a are the first inclined surfaces that each connect to the principal 15 and form an obtuse angle with the principal 15. The angle between the inclined surface 11a and the principal 15 is θ1a. The angle between the inclined surface 12a and the principal 15 is θ2a. The angle between the inclined surface 13a and the principal 15 is θ3a. The angle between the inclined surface 14a and the principal 15 is θ4a. In this case, θ1a, θ2a, θ3a, and θ4a are each greater than 90 degrees. θ1a, θ2a, θ3a, and θ4a may be either equal or different.

The inclined surfaces 11b, 12b, 13b, and 14b are the second inclined surfaces that each connect to the principal 16 and form an obtuse angle with the principal 16. The angle between the inclined surface 11b and the principal 16 is θ1b. The angle between the inclined surface 12b and the principal 16 is θ2b. The angle between the inclined surface 13b and the principal 16 is θ3b. The angle between the inclined surface 14b and the principal 16 is θ4b. In this case, θ1b, θ2b, θ3b, and θ4b are each greater than 90 degrees. θ1b, θ2b, θ3b, and θ4b may be either equal or different. Furthermore, θ1b may be equal to or different from θ1a. The same applies to θ2b and θ2a, θ3b and θ3a, and θ4b and θ4a.

The inclined surfaces 11a, 12a, 13a, and 14a and the inclined surfaces 11b, 12b, 13b, and 14b are individually flat surfaces. The inclined surfaces 11a, 12a, 13a, and 14a and the inclined surfaces 11b, 12b, 13b, and 14b are cut surfaces formed by cutting the side surfaces of the laminate of the plurality of unit cells 100. At least one of the inclined surfaces 11a, 12a, 13a, and 14a and the inclined surfaces 11b, 12b, 13b, and 14b may be a curved surface. The curved surface may be a surface concave toward the inside of the power generation element 10 or may be a surface convex toward the outside of the power generation element 10.

The inclined surfaces 11a, 12a, 13a, and 14a and the inclined surfaces 11b, 12b, 13b, and 14b are each provided across two or more of the plurality of unit cells 100. In Embodiment 1, the inclined surfaces 11a, 12a, 13a, and 14a and the inclined surfaces I I b, 12b, 13b, and 14b are each provided across three unit cells 100.

As illustrated in Fig. 1A, the inclined surface 11a and the inclined surface 11b connect to each other. The connecting part of the inclined surface 11a and the inclined surface 11b is positioned, but not limited to, at the end surface of one of the bipolar current collectors 140. The connecting part of the inclined surface 11a and the inclined surface 1 1b may be positioned at the end surface of any one of the counter electrode active material layers 122, the electrode active material layers 112, or the solid electrolyte layers 130.

In Embodiment 1, the number of unit cells 100 for which the inclined surface 11a is provided is the same as the number of unit cells 100 for which the inclined surface 11b is provided, and θ1a is equal to θ1b. This can reduce variation in effective area of each unit cell 100.

The number of unit cells 100 for which the inclined surface 11a is provided may be different from the number of unit cells 100 for which the inclined surface 11b is provided. For example, one of the inclined surfaces 11a and 11b may be provided for only one unit cell 100. In the case illustrated in Fig. 1A, the inclined surface 11a may be provided from the uppermost unit cell 100 to the lowermost unit cell 100 while the inclined surface 11b is provided for only a part of the lowermost unit cell 100.

In Embodiment 1, the side surfaces 12, 13, and 14 each have a configuration equivalent to the side surface 11. The features of the inclined surfaces 11a and 11b and modifications applicable to the features are also applied to the inclined surfaces 12a and 12b, the inclined surfaces 13a and 13b, and the inclined surfaces 14a and 14b.

As described above, each of the side surfaces 11, 12, 13, and 14 includes the first inclined surface and the second inclined surface. As illustrated in Fig. 1A, therefore, the shape of the power generation element 10 in a section perpendicular to the principals 15 and 16 and the side surfaces 11 and 12 is a hexagon. In a similar manner, as illustrated in Fig. 1B, the shape of the power generation element 10 in a section perpendicular to the principals 15 and 16 and the side surfaces 13 and 14 is a hexagon. The "hexagon" means not only a strict definition of a hexagon but also a shape similar to a hexagon. The shape similar to a hexagon includes a shape with a part of the six sides being curved, a shape with at least one of the six vertices being rounded, and the like.

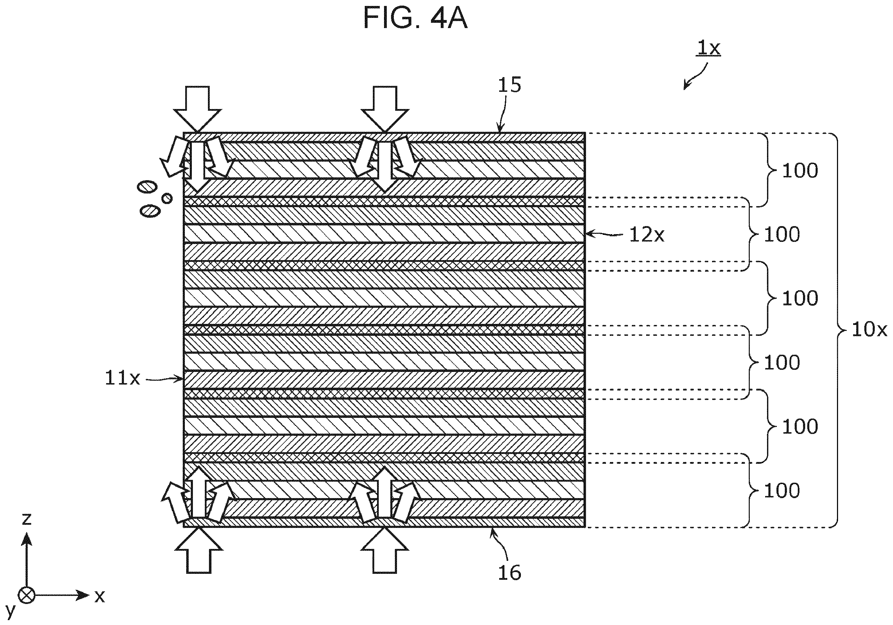

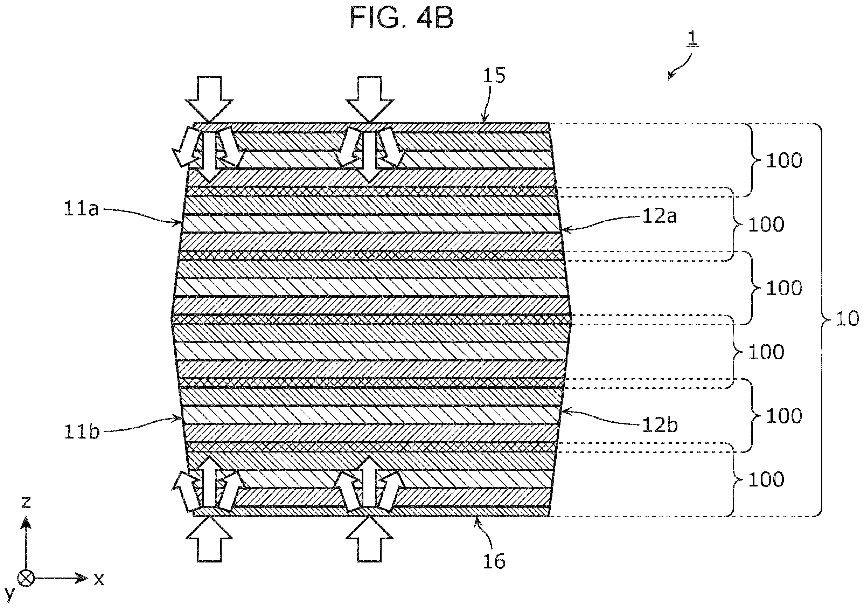

Hereinafter, the effects of providing the inclined surfaces for both the principal 15 side and the principal 16 side in each of the side surfaces 11, 12, 13, and 14 of the power generation element 10 will be described with reference to Figs. 4A and 4B.

Fig. 4A is a sectional view for explaining the problem of a battery 1x according to a comparative example. Fig. 4B is a sectional view for explaining the operation effects of the battery 1 according to Embodiment 1.

The battery 1x illustrated in Fig. 4A includes a power generation element 10x, which includes side surfaces 11x and 12x not provided with inclined surfaces. As indicated by white arrows in Fig. 4A, it is assumed that external force is applied to the battery 1x from above and below.

External force applied vertically to the principals 15 and 16 (that is, in the laminating direction) propagates the power generation element 10x while spreading to some extent. When external force is applied to an edge of the power generation element 10x, the power generation element 10x could be unable to support force propagating diagonally to the laminating direction and could be subject to collapse of particles constituting the active material layers or fracture of the layers. That is, the power generation element 10x could break.

On the other hand, the battery 1, which is illustrated in Fig. 4B, includes the inclined surface 11a. The power generation element 10 is thereby able to support force diagonally propagating among external force applied to the edge of the principal 15. The more the unit cells 100 for which the inclined surface 1 1a is provided, the thicker the layers contributing to supporting the force propagating diagonally. In Embodiment 1, the inclined surface 11a is provided across two or more unit cells 100, so that the power generation element 10 can properly support force propagating diagonally and can be prevented from breaking.

The same applies to the inclined surface 11b. Providing the inclined surface 11b allows the power generation element 10 to support force diagonally propagating among external force applied to the edge of the principal 16 from below. The power generation element 10 is able to properly withstand external force applied from above and below. The battery 1 can thereby be prevented from breaking, and the reliability of the battery 1 can be enhanced.

The same applies to the inclined surfaces 12a, 13a, and 14a and the inclined surfaces 12b, 13b, and 14b. The inclined surfaces are provided along the entire circumferences of the principals 15 and 16. This can prevent the battery 1 from breaking when external force is applied to any edge of the principal 15 or 16. Thus, the reliability of the battery 1 can be further enhanced.

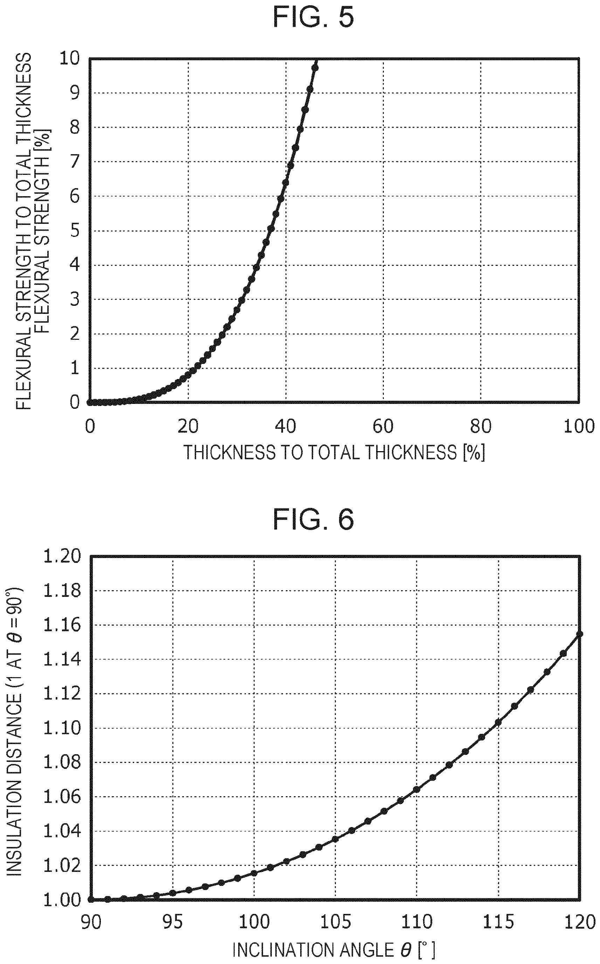

Fig. 5 is a graph illustrating a result of approximate calculation of flexural strength with respect to the thickness of the power generation element 10 according to Embodiment 1. In Fig. 5, the horizontal axis indicates the ratio of the thickness of the part provided with one inclined surface, to the total thickness of the power generation element 10. The total thickness is the distance between the principal 15 and the principal 16. The thickness of the part for which one inclined surface is provided is, for example in the inclined surface 11a, the distance between the principal 15 and the lower end (the connecting part of the inclined surface 11a and the inclined surface 11b) of the inclined surface 11a along the z axis.

In Fig. 5, the vertical axis indicates the ratio of the flexural strength of the part provided with the inclined surface, to the flexural strength for the total thickness of the power generation element 10. In a general estimation, the flexural strength is considered to be proportional to the cube of the thickness. As illustrated in Fig. 5, as the thickness of the part provided with an inclination angle increases, the flexural strength increases at an accelerated rate. For example, it is revealed that, to obtain 1% of the flexural strength for the total thickness of the power generation element 10, the thickness of the part provided with the inclined surface needs to be at least about 22%. For example, when the power generation element 10 is a laminate of twenty unit cells 100 of the same thickness, the inclined surfaces need to be provided for at least five (≥ 20×0.22 = 4.4) upper unit cells 100 and at least five (≥ 20×0.22 = 4.4) lower unit cells 100.

Furthermore, providing the inclined surfaces for the power generation element 10 is advantageous in terms of improving the insulation, in addition to ensuring sufficient strength. Specifically, when the inclined surfaces are provided for the side surfaces of the power generation element 10, it is possible to ensure a long creepage distance, that is, long insulation distance between the electrode layer 110 and the counter electrode layer 120.

Fig. 6 is a graph illustrating a result of approximate calculation of insulation distance with respect to inclination angle θ according to Embodiment 1. In Fig. 6, the horizontal axis indicates the inclination angle θ of an inclined surface. The inclination angle θ is specifically, θ1a, θ1b, θ2a, θ2b, θ3a, θ3b, θ4a, or θ4b, which are illustrated in Fig. 1A or 1B. Fig. 6 illustrates the result of approximate calculation of the insulation distance when the inclined surface is flat. The insulation distance is "1" when the inclination angle θ is 90 degrees, that is, the side surface is positioned at right angle to the principals without including any inclined surface.

As illustrated in Fig. 6, the greater the inclination angle θ, the longer the insulation distance. To increase the insulation distance by 1% or more compared to the case where the inclined angle θ is 90 degrees, the inclined angle θ needs to be about 98 degrees or more. To increase the insulation distance by 5% or more, the inclined angle θ needs to be about 108 degrees or more. To increase the insulation distance by 10% or more, the inclined angle θ needs to be about 115 degrees or more.

As the inclination angle θ increases, the difference in size among the unit cells 100 increases, thus resulting in differences in capacity. Furthermore, as the inclination angle θ increases, the part not contributing to the charge and discharge functions increases in size, and the energy density per volume decreases. Therefore, the inclination angle θ may be, for example, smaller than or equal to 135 degrees or smaller than or equal to 120 degrees.

As described above, including the first inclined surfaces connecting to the principal 15 at an obtuse angle, and the second inclined surfaces connecting to the principal 16 at an obtuse angle in the side surfaces of the power generation element 10, can prevent the power generation element 10 from breaking and enhance the reliability of the battery 1. Furthermore, the increased insulation distance can prevent short circuits from occurring even when the power generation element 10 is partially broken. Thus, the reliability of the battery 1 can be enhanced.

### (Embodiment 2)

Next, Embodiment 2 will be described.

A battery according to Embodiment 2 is different from the battery according to Embodiment 1 in the sectional shape of the power generation element. The following description will be mainly given of differences from Embodiment 1, and the description of the same configurations will be omitted or simplified.

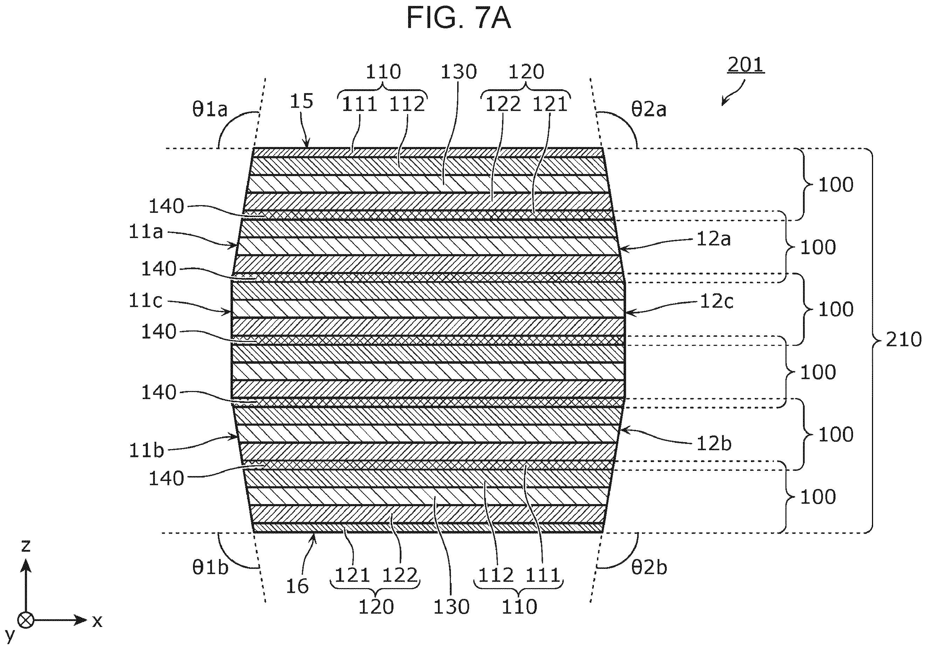

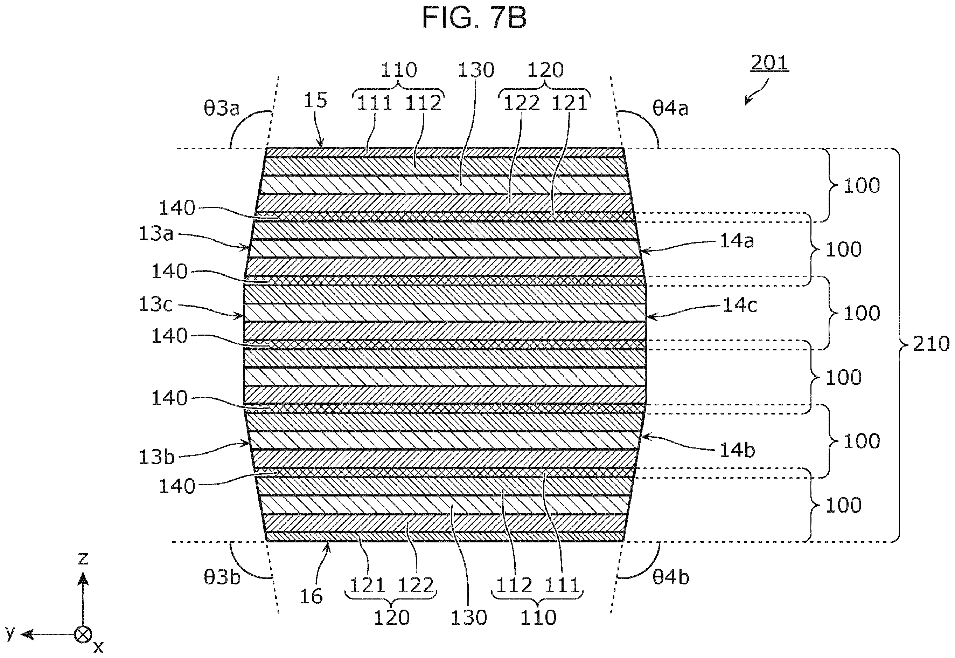

Figs. 7A and 7B are sectional views of a battery 201 according to Embodiment 2. Figs. 7A and 7B correspond to Figs. 1A and 1B, respectively, and illustrate sections orthogonal to each other. The top view of the battery 201 is the same as that of the battery 1 illustrated in Fig. 2.

As illustrated in Figs. 7A and 7B, the battery 201 includes a power generation element 210. The power generation element 210 is different from the power generation element 10 according to Embodiment 1 in the shape of the side surfaces 11, 12, 13, and 14. Specifically, the side surface 11 of the power generation element 210 includes an end surface 11c in addition to the inclined surfaces 11a and 11b. The end surface 11c is perpendicular to the principal 15 or 16. The end surface 11c connects to the inclined surface 11a and the inclined surface 11b. That is, the side surface 11 is composed of three continuous surfaces, including the inclined surface 11a, the end surface 11c, and the inclined surface 11b, from the upper end on the principal 15 side to the lower end on the principal 16 side. This can increase the angle between the inclined surface 11a and the end surface 11c and the angle between the inclined surface 11b and the end surface 11c compared to the case where the inclined surface 11a connects to the inclined surface 11b. That is, edges formed in the side surface 11 have large angles, thus facilitating supporting external force. For example, external force applied to the side surface 11 from the front, that is, external force applied from the side of the power generation element 210 can be received by the end surface 11c, not by any edge. The force is thereby prevented from locally concentrating in a certain part. This can prevent the power generation element 210 from breaking and enhance the reliability of the battery 201.

In Embodiment 2, the side surfaces 12, 13, and 14 have the same configuration as that of the side surface 11. Specifically, as illustrated in Fig. 7A, the side surface 12 includes an end surface 12c. As illustrated in Fig. 7B, the side surface 13 includes an end surface 13c. The side surface 14 includes an end surface 14c. The end surfaces 12c, 13c, and 14c are each perpendicular to the principal 15 or 16. The features of the end surface 11c and modifications applicable to the features are applied to the end surfaces 12c, 13c, and 14c.

As described above, each of the side surfaces 11, 12, 13, and 14 includes the first inclined surface, the second inclined surface, and the end surface perpendicular to the principal 15 or 16. As illustrated in Fig. 7A, the shape of the power generation element 210 in a section perpendicular to the principals 15 and 16 and the side surfaces 11 and 12 is an octagon. In a similar manner, as illustrated in Fig. 7B, the shape of the power generation element 210 in a section perpendicular to the principals 15 and 16 and the side surfaces 13 and 14 is an octagon. The "octagon " means not only a strict definition of an octagon but also a shape similar to an octagon. The shape similar to an octagon includes a shape with a part of the eight sides being curved, a shape with at least one of the eight vertices being rounded, and the like.

In the power generation element 210, which has an octagonal section, the plurality of unit cells 100 are of the same size in the middle part in the thickness direction. This can reduce variation in capacity among the unit cells 100.

At least one of the end surfaces 11c, 12c, 13c, and 14c does not need to be perpendicular to the principal 15 or 16. For example, the angle between at least one of the end surfaces 11c, 12c, 13c, and 14c and the principal 15 or 16 may be an obtuse angle smaller than the obtuse angle between each inclined surface and any principal. In this case, each side surface may include plurality of end surfaces different from the two inclined surfaces. That is, the sectional shape of the power generation element 210 may be another polygonal shape, such as a decagon or a dodecagon, or a shape similar thereto.

Furthermore, it is not necessary to provide all the end surfaces 11c, 12c, 13c, and 14c. For example, the end surfaces 11c and 12c are provided, and the end surfaces 13c and 14c do not need to be provided. That is, the shape of the power generation element 210 may be an octagon in the section illustrated in Fig. 7A while being a hexagon in the section illustrated in Fig. 7B in a similar manner to the power generation element 10 according to Embodiment 1.

### (Embodiment 3)

Next, Embodiment 3 will be described.

A battery according to Embodiment 3 is different from the battery according to Embodiment 2 in including an insulating member coating a side surface. The following description will be mainly given of differences from Embodiment 2, and the description of the same configurations will be omitted or simplified.

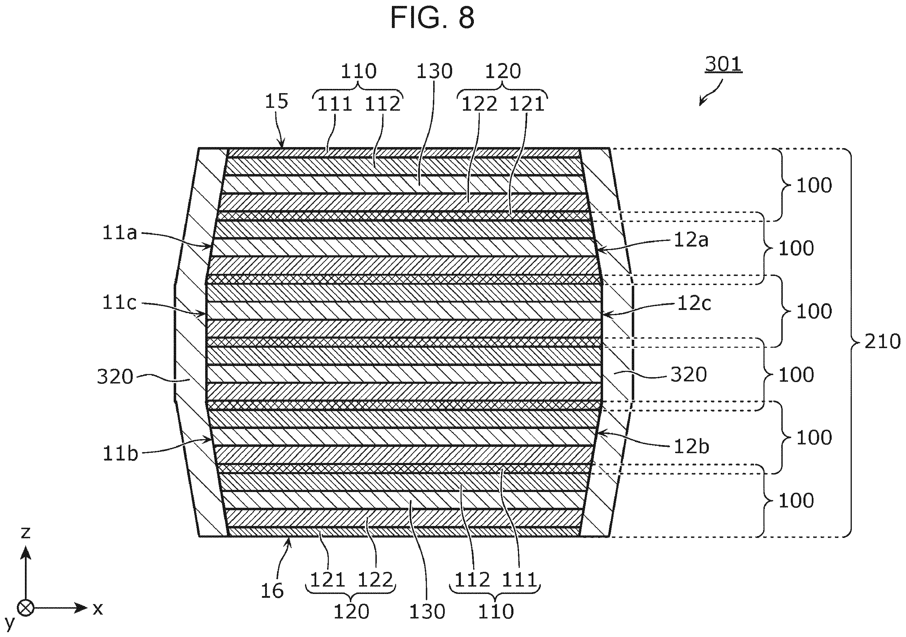

Fig. 8 is a sectional view of a battery 301 according to Embodiment 3. Fig. 8 corresponds to Fig. 1A and illustrates a section parallel to the x-z plane.

As illustrated in Fig. 8, the battery 301 includes an insulating member 320 in addition to the configuration of the battery 201 according to Embodiment 2. The insulating member 320 coats the side surfaces 11 and 12. The insulating member 320 further coats the side surfaces 13 and 14, not illustrated. That is, the insulating member 320 coats the entire side surfaces of the power generation element 210.

The insulating member 320 is made of an insulating material having an electrical insulation property. For example, the insulating member 320 contains resin. The resin is, but not limited to, for example, epoxy resin. The insulating material can be an inorganic material. The insulating material that can be used is selected based on various properties, including flexibility, gas barrier properties, impact resistance, and heat resistance. The insulating member 320 may be made of plurality of different materials.

In Embodiment 3, the insulating member 320 coats the side surfaces of the power generation element 210 with uniform thickness. The coating thickness of the insulating member 320 is smaller than or equal to the thickness of the power generation element 210. The battery 301 can therefore be prevented from increasing in volume, and the energy density can be increased.

Coating the side surfaces with the insulating member 320 can prevent the members from collapsing and breaking in the side surfaces. The insulating member 320 can prevent electrical short circuits. That is, the effect of the inclined surfaces on enhancing the reliability can be doubly guaranteed.

The insulating member 320 can be formed by using application, dipping, or bonding of the resin material or another process. The formation method of the insulating member 320 is not limited.

The insulating member 320 does not need to coat the entire side surfaces of the power generation element 210. For example, the insulating member 320 may be provided so as to coat only the side surface 11. For example, the insulating member 320 may coat only the inclined surfaces 11a and 11b while not coating the end surface 11c. The portion for which the insulating member 320 is provided may be selected in view of the dimensions, usage situation, and processing cost of the battery 301 and any other circumstances.

In Embodiment 3, as illustrated in Fig. 8, the insulating member 320 is positioned within a thickness range of the power generation element 210. The thickness range means a space between the extension plane of the principal 15 and the extension plane of the principal 16. For example, the upper end of the insulating member 320 is flush with the principal 15, and the lower end of the insulating member 320 is flush with the principal 16. The insulating member 320 is provided within the thickness range, so that the upper and lower surfaces of the battery 301 can individually be flat. This can improve the mountability of the battery 301.

The upper end of the insulating member 320 may be recessed from the principal 15, instead of being flash with the principal 15. The lower end of the insulating member 320 may be recessed from the principal 16, instead of being flash with the principal 16. Alternatively, a part of the insulating member 320 may be protrude from the principal 15 or 16.

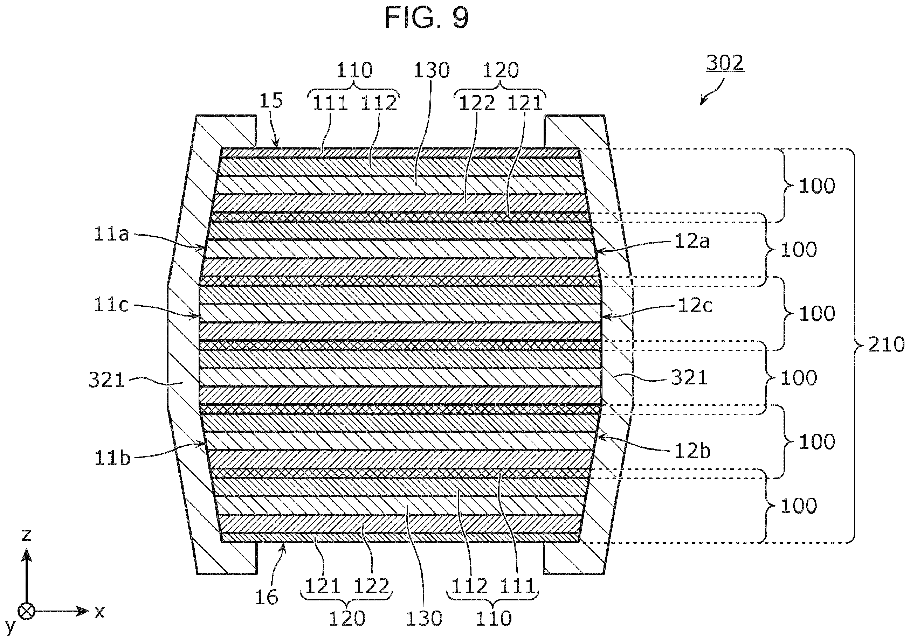

Fig. 9 is a sectional view of a battery 302 according to another example of Embodiment 3. The battery 302, which is illustrated in Fig. 9, includes an insulating member 321, instead of the insulating member 320. A part of the insulating member 321 is positioned outside the thickness range of the power generation element 210. Specifically, the insulating member 321 coats the principals 15 and 16. That is, the insulating member 321 is provided so as to extend from the side surface onto the principals 15 and 16. When the insulating member 321 is subjected to force applied from above or below, therefore, the upper and lower ends of the insulating member 321 are respectively caught by the principals 15 and 16, so that the insulating member 321 is prevented from falling off. This can prevent the end surface of the power generation element 210 from collapsing together with the insulating member 321, and the reliability can be enhanced.

When the insulating member 321 is positioned outside the thickness range of the power generation element 210, the insulating member 321 does not need to coat the principal 15 or 16. That is, a part of the insulating member 321 may be just positioned above the principal 15 or below the principal 16.

For example, when an object larger than the battery 302 is going to hit the principal 15 or 16 of the battery 302, the insulating member 321 can receive the object instead of the principal 15 or 16. For example, when the battery 302 is mounted with the principal 15 facing up and a plate-like object falls toward the battery 302, the insulating member 321 protruding above the principal 15 can receive the falling object. The power generation element 210 can thereby be prevented from being directly exposed to impact, and the reliability of the battery 302 can be enhanced.

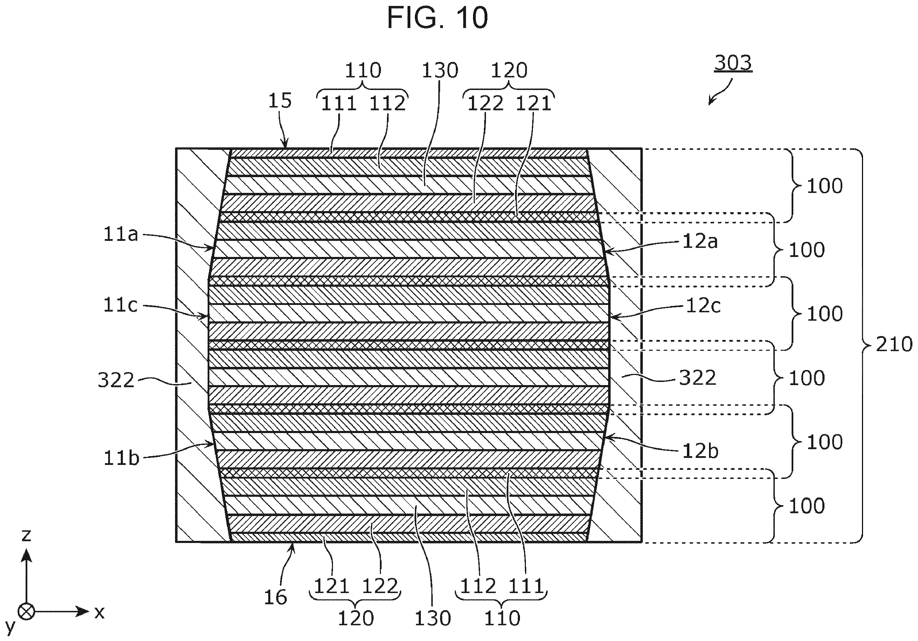

Fig. 10 is a sectional view of a battery 303 according to still another example of Embodiment 3. The battery 303, which is illustrated in Fig. 10, includes an insulating member 322 instead of the insulating member 320. The insulating member 322 has a larger coating thickness at the edges of the principal 15 and 16 on both sides. Specifically, the coating thickness of the insulating member 322 increases toward the upper and lower ends depending on the inclination of the inclined surfaces such that the outer surface is perpendicular to the principal 15 or 16. Therefore, the shape of the battery 303 can be a flat cuboid, for example.

The upper and lower edges of the power generation element 210 are sensitive to impact and are highly likely to break. In the insulating member 322, the portions coating the upper and lower edges of the power generation element 210 increase in coating thickness. This can improve the protection for the upper and lower edges of the power generation element 210 and enhance the reliability of the battery 303.

In the examples illustrated above, the insulating members 320, 321, and 322 each coat the side surfaces of the power generation element 210 according to Embodiment 2. However, the insulating members 320, 321, and 322 each may coat the side surfaces of the power generation element 10 according to Embodiment 1.

### (Embodiment 4)

Next, Embodiment 4 will be described.

A battery according to Embodiment 4 is different from the battery according to Embodiment 1 in including a flexible container. The following description will be mainly given of differences from Embodiment 1, and the description of the same configurations will be omitted or simplified.

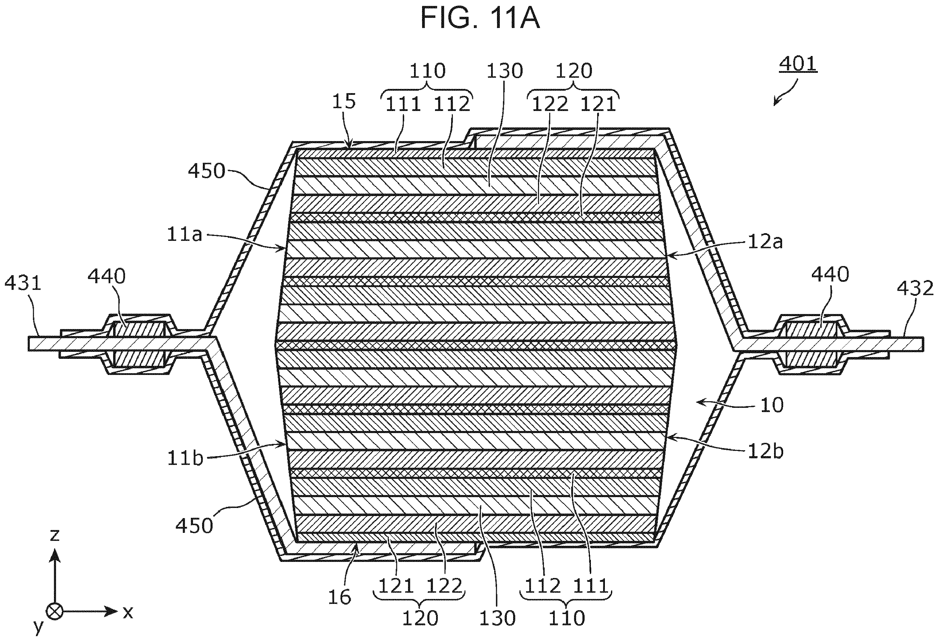

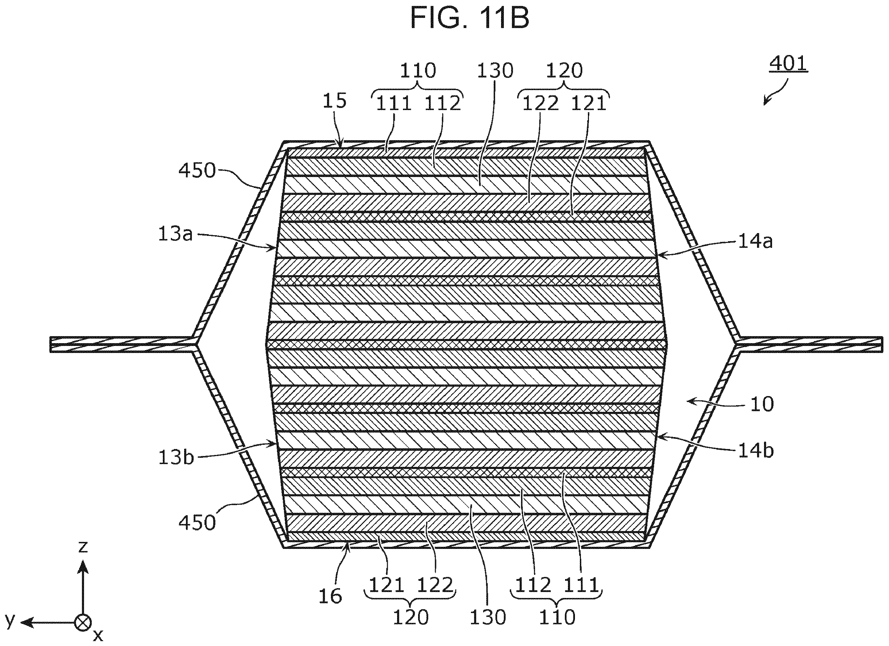

Figs. 11A and 11B are sectional views of a battery 401 according to Embodiment 4. Figs. 11A and 11B correspond to Figs. 1A and 1B, respectively, and illustrate sections orthogonal to each other.

As illustrated in Figs. 11A and 11B, the battery 401 includes the power generation element 10, a counter electrode current collector terminal 431, an electrode current collector terminal 432, insulating sealing sleeves 440, and a flexible container 450. The power generation element 10 is sealed within the flexible container 450. The inside of the flexible container 450 is reduced pressure space at a pressure lower than atmospheric pressure, such as vacuum.

The flexible container 450 is, for example, a moisture-proof laminated bag. The moisture-proof laminated bag may be a bag produced by processing a laminate film or a bag produced by processing two laminate films laid on each other. The material of the moisture-proof laminated bag is not limited and can be a resin material having low air and moisture permeabilities or the like.

The counter electrode current collector terminal 431 and the electrode current collector terminal 432 are formed by using a conductive material, for example. The counter electrode current collector terminal 431 and the electrode current collector terminal 432 are, for example, plate-like members, such as a metal foil of copper, aluminum, or the like. The counter electrode current collector terminal 431 and the electrode current collector terminal 432 are flexible and can be bent.

In the power generation element 10 according to Embodiment 4, plurality of unit cells 100 are electrically coupled in series to constitute a serial battery. The counter electrode current collector terminal 431 and the electrode current collector terminal 432 are coupled to the positive electrode and the negative electrode of the serial battery, respectively. Specifically, the counter electrode current collector terminal 431 is in contact with the principal 16 of the power generation element 10 and is coupled to the lowermost counter electrode layer 120. The electrode current collector terminal 432 is in contact with the principal 15 of the power generation element 10 and is coupled to the uppermost electrode layer 110.

One end of the counter electrode current collector terminal 431 is coupled to the principal of the counter electrode current collector 121 of the lowermost counter electrode layer 120 while the other end is provided so as to protrude from the side surface 11 of the power generation element 10. The counter electrode current collector terminal 431 is a lead for extracting the counter electrode. The other end of the counter electrode current collector terminal 431 protrudes out of the flexible container 450. The other end of the counter electrode current collector terminal 431 is welded to the flexible container 450 together with the insulating sealing sleeve 440 in a portion covered with the flexible container 450.

One end of the electrode current collector terminal 432 is coupled to the principal of the electrode current collector 111 of the uppermost electrode layer 110 while the other end is provided so as to protrude from the side surface 12 of the power generation element 10. The electrode current collector terminal 432 is a lead for extracting the electrode. The other end of the electrode current collector terminal 432 protrudes out of the flexible container 450. The other end of the electrode current collector terminal 432 is welded to the flexible container 450 together with the insulating sealing sleeve 440 in a portion covered with the flexible container 450.

The insulating sealing sleeves 440 are provided so as to keep the sealing of the internal space of the flexible container 450. The insulating sealing sleeves 440 are provided to fill the gap between the flexible container 450 and the counter electrode current collector terminal 431 or the electrode current collector terminal 432.

In Embodiment 4, the counter electrode current collector terminal 431 and the electrode current collector terminal 432 are provided so as to respectively protrude from the side surfaces 11 and 12 of the power generation element 10. This can leave a sufficient distance between the counter electrode current collector terminal 431 and the electrode current collector terminal 432, thus preventing short circuits due to contact between the current collector terminals. The counter electrode current collector terminal 431 and the electrode current collector terminal 432 may be provided so as to respectively protrude from the side surfaces 13 and 14, which are illustrated in Fig. 11B.

Alternatively, the counter electrode current collector terminal 431 and the electrode current collector terminal 432 may be provided so as to protrude from the two side surfaces adjacent to each other. Alternatively, the counter electrode current collector terminal 431 and the electrode current collector terminal 432 may be provided so as to protrude from different regions of one side surface. Arranging the current collector terminals close to each other can improve the mountability of the battery 401. Furthermore, the counter electrode current collector terminal 431 may include two counter electrode current collector terminals 431, and the electrode current collector terminal 432 may include two electrode current collector terminals 432. The two counter electrode current collector terminals 431 may be provided so as to protrude from two side surfaces while the two electrode current collector terminals 432 may be provided so as to protrude from two side surfaces.

The battery 401 is produced by, in reduced pressure space, arranging the power generation element 10 within the flexible container 450, followed by sealing. The internal space of the flexible container 450 can thereby be reduced pressure space. Since the internal space of the flexible container 450 has reduced pressure, the atmospheric pressure applies compression force to the flexible container 450. This compression force is applied through the flexible container 450 so as to press the edges of the principals 15 and 16 of the power generation element 10. This can increase the risk of collapse and short circuits at the edges.

On the other hand, the first and second inclined surfaces are provided for each side surface of the power generation element 10 and can sufficiently support the compression force, thus preventing collapse and short circuits from occurring. This can enhance the reliability of the battery 401.

When the power generation element 10 is not sufficiently appressed against the flexible container 450, the power generation element 10 sometimes move within the flexible container 450. When the power generation element 10 moves due to vibration or another cause, the power generation element 10 could come into collision with the inner surface of the flexible container 450. Such collision is more likely to occur at the edges of the principal 15 or 16 of the power generation element 10. Each side surface of the power generation element 10 including the first inclined surface and the second inclined surface can sufficiently support external force due to collision, thus preventing collapse and short circuits from occurring. This can enhance the reliability of the battery 401.

In the example illustrated in Embodiment 4, the power generation element 10 is sealed within the flexible container 450. However, the power generation element 210 according to Embodiment 2 may be sealed within the flexible container 450. In addition, the side surfaces of the power generation element 10 or 210 to be sealed may be provided with the insulating members 320, 321, and 322 according to Embodiment 3.

### (Embodiment 5)

Next, Embodiment 5 will be described.

A battery according to Embodiment 5 is different from the battery according to Embodiment 1 in that plurality of unit cells are electrically coupled in parallel. The following description will be mainly given of differences from Embodiment 1, and the description of the same configurations will be omitted or simplified.

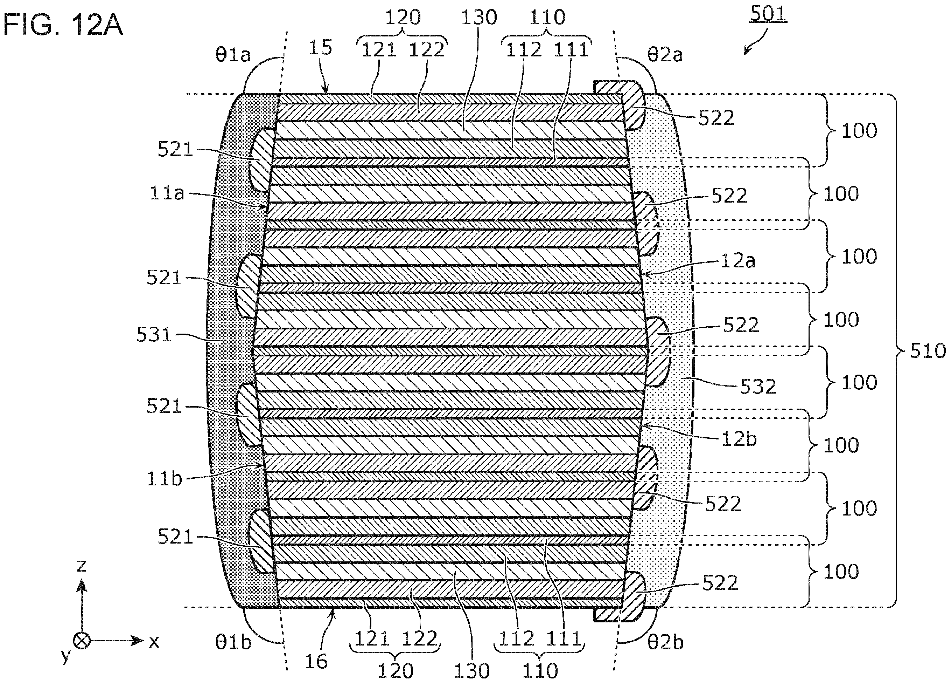

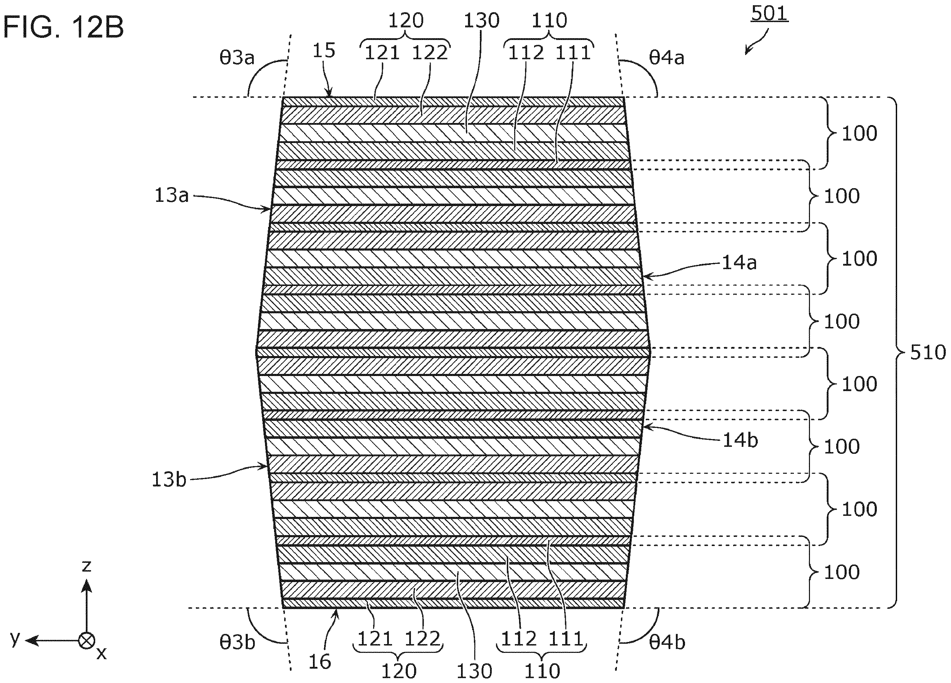

Figs. 12A and 12B are sectional views of a battery 501 according to Embodiment 5. Figs. 12A and 12B correspond to Figs. 1A and 1B, respectively, and illustrate sections orthogonal to each other. The top view of the battery 501 is the same as the top view of the battery 1 illustrated in Fig. 2.

As illustrated in Figs. 12A and 12B, the battery 501 includes a power generation element 510, electrode insulating layers 521, counter electrode insulating layers 522, a counter electrode extraction part 531, and an electrode extraction part 532.

In the power generation element 510, plurality of unit cells 100 are electrically coupled in parallel. In Embodiment 5, the order of layers constituting one of any two adjacent unit cells 100 is opposite to the order of layers constituting the other unit cell 100. For example, in the lowermost unit cell 100, the counter electrode current collector 121, the counter electrode active material layer 122, the solid electrolyte layer 130, the electrode active material layer 112, and the electrode current collector 111 are arranged from the bottom in this order. In the second unit cell 100 from the bottom, the electrode current collector 111, the electrode active material layer 112, the solid electrolyte layer 130, the counter electrode active material layer 122, and the counter electrode current collector 121 are arranged from the bottom in this order. In this case, each counter electrode current collector 121 is shared by two adjacent unit cells 100. Each electrode current collector 111 is also shared by two adjacent unit cells 100.

In Embodiment 5, an even number of unit cells 100 are laminated, and the uppermost layer and the lowermost layer are of the same polarity. In the example illustrated in Figs. 12A and 12B, the principals 15 and 16 are both principals of the counter electrode current collectors 121. The principals 15 and 16 may be both principals of the electrode current collectors 111.

The electrode insulating layers 521 are an example of the electrode insulating member covering the electrode layers 110 of the plurality of unit cells 100 in the side surface 11. The side surface 11 is an example of the first region. The electrode insulating layers 521 each continuously cover the electrode layers 110 of two adjacent unit cells 100. Specifically, each electrode insulating layer 521 continuously covers at least a part of the solid electrolyte layer 130 of one of two adjacent unit cells 100 to at least a part of the solid electrolyte layer 130 of the other one of the two adjacent unit cells 100.

The electrode insulating layers 521 cover at least a part of each solid electrolyte layer 130 in the side surface 11. Therefore, the electrode layers 110 are less likely to be exposed even when the electrode insulating layers 521 have varying widths (lengths along the z axis) due to manufacturing variation. Thus, it is possible to prevent short circuits between the electrode layers 110 and the counter electrode layers 120 via the counter electrode extraction part 531, which is formed so as to cover the electrode insulating layers 521. Furthermore, the end surfaces of the solid electrolyte layers 130 made of a powder material has very fine irregularities. The electrode insulating layers 521 penetrate the irregularities, and the adhesion strength of the electrode insulating layers 521 is increased. This can enhance the insulation reliability.

In Embodiment 5, the electrode insulating layers 521 may cover the entirety of each solid electrolyte layer 130 in the side surface 11. The electrode insulating layers 521 may cover at least a part of each counter electrode active material layer 122. The electrode insulating layers 521 do not need to partially cover each solid electrolyte layer 130 and may cover only the electrode layers 110.

In each of the plurality of unit cells 100, the electrode insulating layer 521 does not cover at least a part of the counter electrode layer 120. In Embodiment 5, the electrode insulating layers 521 do not cover either the counter electrode current collectors 121 or the counter electrode active material layers 122. The electrode insulating layers 521 are shaped in stripes when seen in the positive direction of the x axis. The electrode insulating layers 521 may be provided separately in stripes or may be provided in a ladder fashion. For example, the electrode insulating layers 521 may be provided along the z axis at ends of the side surface 11 on the y axis. That is, the electrode insulating layers 521 may partially cover each counter electrode current collector 121.

The counter electrode insulating layers 522 are an example of the counter electrode insulating member covering the counter electrode layers 120 of the plurality of unit cells 100 in the side surface 12. The side surface 12 is an example of the second region. The counter electrode insulating layers 522 each continuously cover the counter electrode layers 120 of two adjacent unit cells 100. Specifically, each counter electrode insulating layer 522 continuously covers at least a part of the solid electrolyte layer 130 of one of two adjacent unit cells 100 to at least a part of the solid electrolyte layer 130 of the other one of the two adjacent unit cells 100.

The counter electrode insulating layers 522 cover at least a part of each solid electrolyte layer 130 in the side surface 12. Therefore, the counter electrode layers 120 are less likely to be exposed even when the counter electrode insulating layers 522 have varying widths (lengths along the z axis) due to manufacturing variation. Thus, it is possible to prevent short circuits between the electrode layers 110 and the counter electrode layers 120 via the electrode extraction part 532, which is formed so as to cover the counter electrode insulating layers 522. Furthermore, the end surfaces of the solid electrolyte layers 130 made of a powder material have very fine irregularities. The counter electrode insulating layers 522 penetrate the irregularities, and the adhesion strength of the counter electrode insulating layers 522 is increased. This can enhance the insulation reliability.

In Embodiment 5, the counter electrode insulating layers 522 may cover the entirety of each solid electrolyte layer 130 in the side surface 12. The counter electrode insulating layers 522 may cover at least a part of each electrode active material layer 112. The counter electrode insulating layers 522 do not need to cover at least a part of each solid electrolyte layer 130 and may cover only the counter electrode layers 120.

In each of the plurality of unit cells 100, the counter electrode insulating layer 522 does not cover at least a part of the electrode layer 110. In Embodiment 5, the counter electrode insulating layers 522 do not cover either the electrode current collectors 111 or the electrode active material layers 112. The counter electrode insulating layers 522 are shaped in stripes when seen in the negative direction of the x axis. The counter electrode insulating layers 522 may be provided separately in stripes or may be provided in a ladder fashion. For example, the counter electrode insulating layers 522 may be provided along the z axis at ends of the side surface 12 on the y-axis. That is, the counter electrode insulating layers 522 may partially cover each electrode current collector 111.

The counter electrode extraction part 531 is responsible for electrically coupling the unit cells 100 in parallel. The counter electrode extraction part 531 serves as a part for extracting the counter electrode (for example, the positive electrode) of the battery 501.

As illustrated in Fig. 12A, the counter electrode extraction part 531 is an electrical conductor that covers the side surface 11 and the electrode insulating layers 521 and is electrically coupled to the plurality of counter electrode layers 120. Specifically, the counter electrode extraction part 531 covers the electrode insulating layers 521 and portions not covered with the electrode insulating layers 521 in the side surface 11.

In the portions not covered with the electrode insulating layers 521 in the side surface 11, the end surfaces of the counter electrode current collectors 121 and the counter electrode active material layers 122 are exposed. The counter electrode extraction part 531 is in contact with the end surfaces of the counter electrode current collectors 121 and the counter electrode active material layers 122 and are electrically coupled to the counter electrode layers 120. The counter electrode active material layers 122, which is made of a powder material, have very fine irregularities in a similar manner to the solid electrolyte layers 130. The counter electrode extraction part 531 penetrate the irregularities in the end surfaces of the counter electrode active material layers 122, and the adhesion strength of the counter electrode extraction part 531 is increased. This can enhance the electrical connection reliability.

As illustrated in Fig. 12A, the counter electrode extraction part 531 covers the substantially entire side surface 11 from the lower end to the upper end together. In the power generation element 510 according to Embodiment 5, the uppermost layer and the lowermost layer are the counter electrode current collectors 121. In the vicinity of the upper end and the lower end of the side surface 11, the counter electrode extraction part 531 may cover a part of the principal of the counter electrode current collector 121 positioned in each of the uppermost and lowermost layers. In this case, the counter electrode extraction part 531 is resistant to external force along the z axis and can be prevented from falling off. Furthermore, the area of contact between the counter electrode extraction part 531 and the counter electrode current collectors 121 is increased. This can reduce the connection resistance between the counter electrode extraction part 531 and the counter electrode current collectors 121, thus improving the large current characteristics.

The electrode extraction part 532 is responsible for electrically coupling the unit cells 100 in parallel. The electrode extraction part 532 serves as a part for extracting the electrode (for example, the negative electrode) of the battery 501.

As illustrated in Fig. 12A, the electrode extraction part 532 is an electrical conductor that covers the side surface 12 and the counter electrode insulating layers 522 and is electrically coupled to the plurality of electrode layers 110. Specifically, the electrode extraction part 532 covers the counter electrode insulating layers 522 and portions not covered with the counter electrode insulating layers 522 in the side surface 12.

In the portions not covered with the counter electrode insulating layers 522 in the side surface 12, the end surfaces of the electrode current collectors 111 and the electrode active material layers 112 are exposed. The electrode extraction part 532 is in contact with the end surfaces of the electrode current collectors 111 and the electrode active material layers 112 and are electrically coupled to the electrode layers 110. The electrode active material layers 112, which are made of a powder material, have very fine irregularities in a similar manner to the solid electrolyte layers 130. The electrode extraction part 532 penetrates the irregularities in the end surfaces of the electrode active material layers 112, and the adhesion strength of the electrode extraction part 532 is increased. This can enhance the electrical connection reliability. As illustrated in Fig. 12A, the electrode extraction part 532 covers the substantially entire side surface 12 from the lower end to the upper end together.

The counter electrode extraction part 531 and the electrode extraction part 532 are made of a conductive resin material or the like. Alternatively, the counter electrode extraction part 531 and the electrode extraction part 532 may be made of a metal material, such as solder. The conductive material that can be used is selected based on various properties, including flexibility, gas barrier properties, impact resistance, heat resistance, and solder wettability. The counter electrode extraction part 531 and the electrode extraction part 532 are made of the same material but may be made of different materials.

At least one of the counter electrode extraction part 531 and the electrode extraction part 532 may be made of plurality of materials. For example, at least one of the counter electrode extraction part 531 and the electrode extraction part 532 may have a multilayer structure.

As illustrated in Fig. 12B, the side surfaces 13 and 14 are not provided with any structure for extracting the electrode or the counter electrode. However, the present disclosure is not limited thereto. On the side surface 13, the electrode insulating layers 521 and the counter electrode extraction part 531 may be provided in a similar manner to the side surface 11. On the side surface 14, the counter electrode insulating layer 522 and the electrode extraction part 532 may be provided in a similar manner to the side surface 12. Alternatively, the electrode insulating layers 521 and the counter electrode extraction part 531 may be provided on the side surfaces 11 and 12, and the counter electrode insulating layers 522 and the electrode extraction part 532 may be provided on the side surfaces 13 and 14. On the side surfaces 13 and 14, the insulating member 320, 321, or 322 may be provided in a similar manner to Embodiment 3.

As described above, in the battery 501 according to Embodiment 5, the plurality of unit cells 100 are electrically coupled in parallel, and no unit cells 100 are coupled in series. Therefore, during charging and discharging of the battery 501, the battery 501 is less likely to be charged and discharged unevenly because of variation in capacity of unit cells 100. This can significantly reduce the risk of the battery 501 being partially overcharged or over-discharged.

The counter electrode extraction part 531 and the electrode extraction part 532 are respectively provided along the side surfaces 11 and 12 of the power generation element 510. The configuration responsible for coupling the unit cells 100 in parallel and extracting the positive and negative electrodes can be implemented with a small volume. This can increase the energy density of the battery 501.

The provision of the first and second inclined surfaces can increase the area of contact between the layers of the power generation element 510 and the electrode insulating layers 521, the counter electrode insulating layers 522, the counter electrode extraction part 531, or the electrode extraction part 532. This can reduce the connection resistance between the counter electrode extraction part 531 and the counter electrode layers 120 and the connection resistance between the electrode extraction part 532 and the electrode layers 110, thus improving the large current characteristics of the battery 501. Furthermore, the electrode insulating layers 521, the counter electrode insulating layers 522, the counter electrode extraction part 531, and the electrode extraction part 532 are prevented from falling off. This can enhance the reliability of the battery 501.

### (Embodiment 6)

Next, Embodiment 6 will be described.

A battery according to Embodiment 6 is different from the battery according to Embodiment 5 in including a flexible container. The flexible container is the same as the flexible container included in the battery according to Embodiment 4. The following description will be mainly given of differences from Embodiments 4 and 5, and the description of the same configurations will be omitted or simplified.

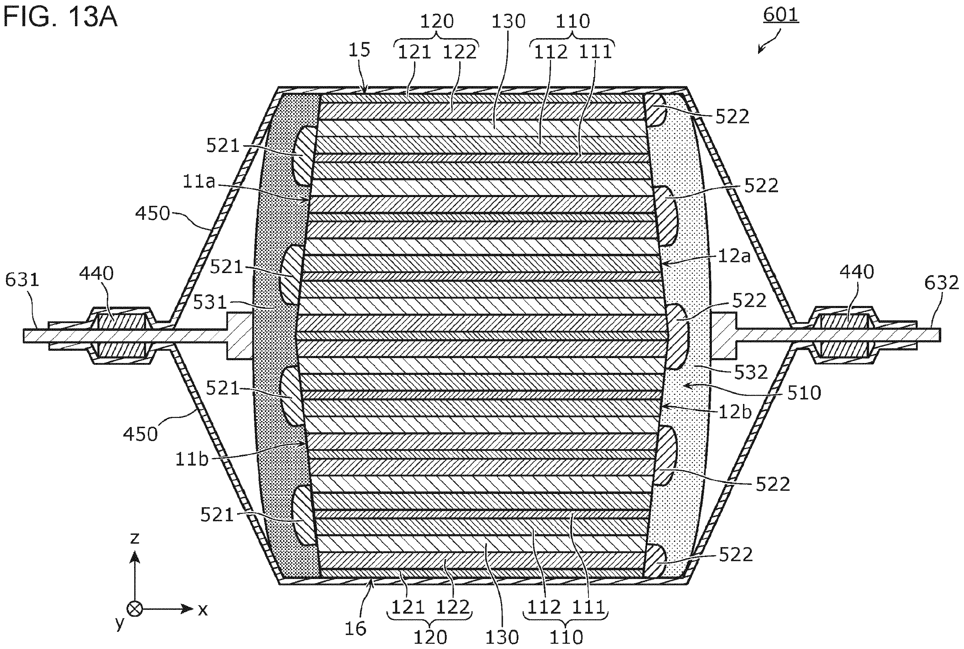

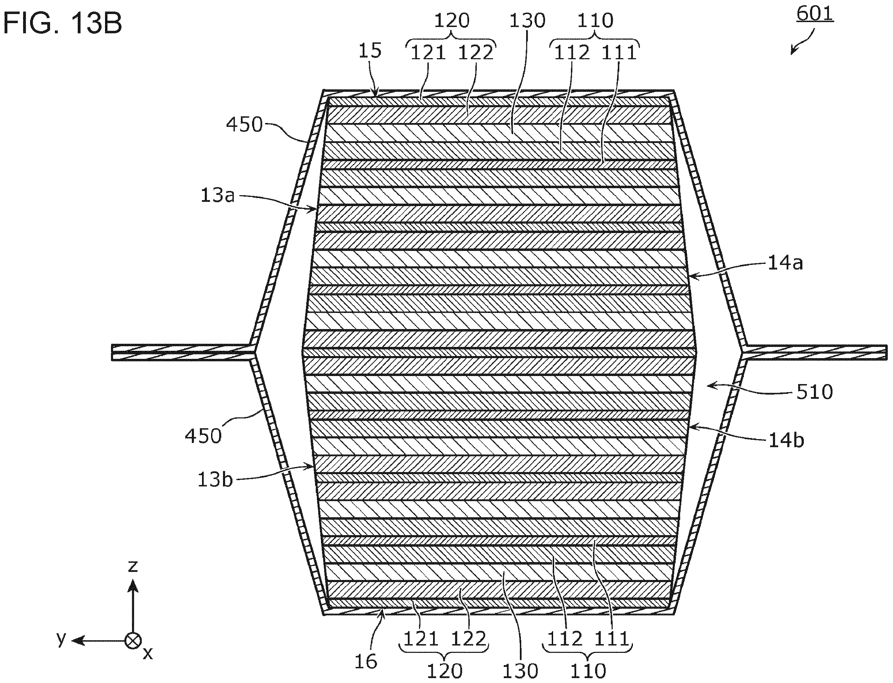

Figs. 13A and 13B are sectional views of a battery 601 according to Embodiment 6. Figs. 13A and 13B correspond to Figs. 12A and 12B, respectively, and illustrate sections orthogonal to each other.

As illustrated in Figs. 13A and 13B, the battery 601 includes the power generation element 510, a counter electrode current collector terminal 631, an electrode current collector terminal 632, the insulating sealing sleeves 440, and the flexible container 450. The power generation element 510 is provided with the electrode insulating layers 521, the counter electrode insulating layers 522, the counter electrode extraction part 531, and the electrode extraction part 532 in a similar manner to Embodiment 5.

In the battery 601 according to Embodiment 6, the counter electrode extraction part 531 and the electrode extraction part 532, which are provided for the side surfaces of the power generation element 510, are used for extracting the positive and negative electrodes. Therefore, the counter electrode current collector terminal 631 and the electrode current collector terminal 632 are not coupled to the principals of the power generation element 510 but are coupled to the side surfaces. Specifically, the counter electrode current collector terminal 631 is coupled to the counter electrode extraction part 531. The electrode current collector terminal 632 is coupled to the electrode extraction part 532.

The counter electrode current collector terminal 631 and the electrode current collector terminal 632 are made of a conductive material, for example, such as metal. The counter electrode current collector terminal 631 and the electrode current collector terminal 632 are, for example, thin plate-like members, such as a metal foil of copper, aluminum, or the like. Each of the counter electrode current collector terminal 631 and the electrode current collector terminal 632 has a larger plate thickness at the tip end. This can increase the connecting area between the counter electrode extraction part 531 and the counter electrode current collector terminal 631 and the electrode extraction part 532 and the electrode current collector terminal 632. The counter electrode current collector terminal 631 and the electrode current collector terminal 632 can be, respectively, coupled to the counter electrode extraction part 531 and the electrode extraction part 532 with low resistance.

In Embodiment 6, as illustrated in Fig. 13B, neither the counter electrode current collector terminal 631 nor the electrode current collector terminal 632 is provided on the side surfaces 13 and 14. However, the present disclosure is not limited thereto. When the counter electrode extraction part 531 and the electrode extraction part 532 are provided on the side surfaces 13 and 14, for example, the counter electrode current collector terminal 631 and the electrode current collector terminal 632 may be provided for the side surfaces 13 and 14.

The counter electrode current collector terminal 631 and the electrode current collector terminal 632 are not coupled to either the principal 15 or 16 of the power generation element 510. The principals 15 and 16 are in direct contact with the inner surface of the flexible container 450. Therefore, the edges of the principals 15 and 16 of the power generation element 510 could be exposed to strong impact. In a similar manner to the battery 401 according to Embodiment 4, each side surface of the power generation element 510 includes the first inclined surface and the second inclined surface, and the first and second inclined surfaces can sufficiently support the compression force of the flexible container 450 and external force due to impact or the like, thus preventing collapse and short circuits from occurring in the side surfaces of the power generation element 510. Thus, the reliability of the battery 601 can be enhanced.

The shape of the counter electrode current collector terminal 631 and the electrode current collector terminal 632 is not limited. The principals 15 and 16 of the power generation element 510 are each a part of the counter electrode current collector 121, and the counter electrode current collector terminal 631 may be substituted with the counter electrode current collector terminal 431, which is illustrated in Fig. 11A.

When the power generation element 510 includes an odd number of unit cells 100, the principals 15 and 16 are of different polarities, and it is possible to use current collector terminals equivalent to the counter electrode current collector terminal 431 and the electrode current collector terminal 432, which are illustrated in Embodiment 4.

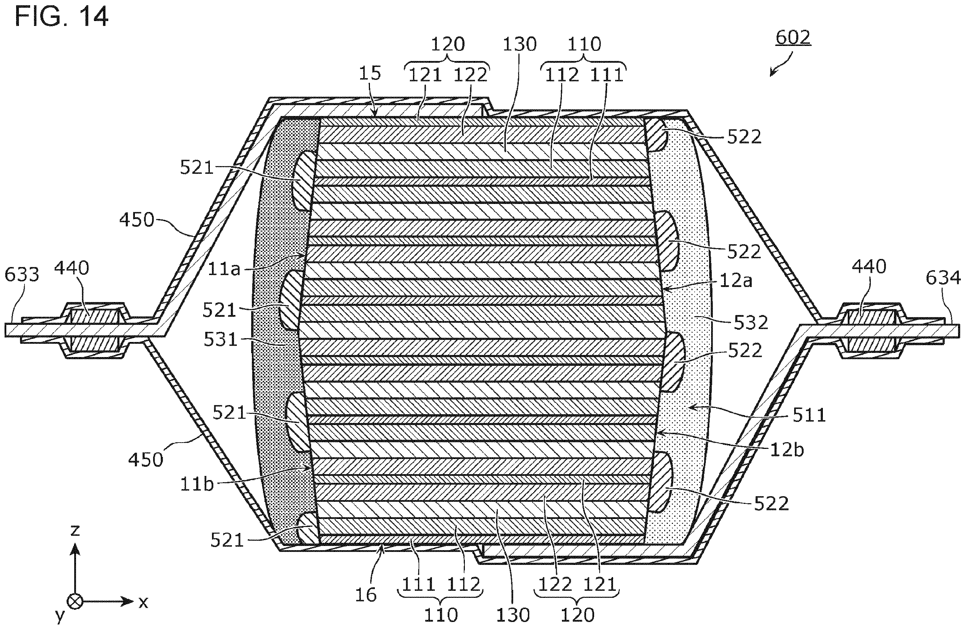

Fig. 14 is a sectional view of a battery 602 according to another example of Embodiment 6. As illustrated in Fig. 14, compared to the battery 601, which is illustrated in Fig. 13A, the battery 602 includes a power generation element 511 instead of the power generation element 510. In the power generation element 511, an odd number of unit cells 100 are laminated on top of each other and are electrically coupled in parallel. In the power generation element 511, the order of layers constituting each unit cell 100 is reversed at every unit cell 100 along the z axis. In the case of an odd number of unit cells 100, therefore, the principals 15 and 16 are of opposite polarities. In the example illustrated in Fig. 14, the principal 15 is a part of the counter electrode current collector 121, and the principal 16 is a part of the electrode current collector 111.

The battery 602 includes a counter electrode current collector terminal 633 and an electrode current collector terminal 634. One end of the counter electrode current collector terminal 633 is coupled to the principal of the counter electrode current collector 121 of the uppermost counter electrode layer 120, and the other end is provided so as to protrude from the side surface 11 of the power generation element 511. One end of the electrode current collector terminal 634 is coupled to the principal of the electrode current collector 111 of the lowermost electrode layer 110, and the other end is provided so as to protrude from the side surface 12 of the power generation element 511.

The counter electrode current collector terminal 633 and the electrode current collector terminal 634 are coupled to the respective principals of the power generation element 511. Therefore, the counter electrode current collector terminal 633 and the electrode current collector terminal 634 can be coupled to the power generation element 511 through a larger area than in the case where the counter electrode current collector terminal 633 and the electrode current collector terminal 634 are coupled to the side surfaces. This can improve the large current characteristics of the battery 602.

### (Embodiment 7)

Next, Embodiment 7 will be described.

A battery according to Embodiment 7 is different from the battery according to Embodiment 3 or 5 in including a sealing member and extraction terminals. The following description will be mainly given of differences from Embodiment 3 or 5, and the description of the same configurations will be omitted or simplified.

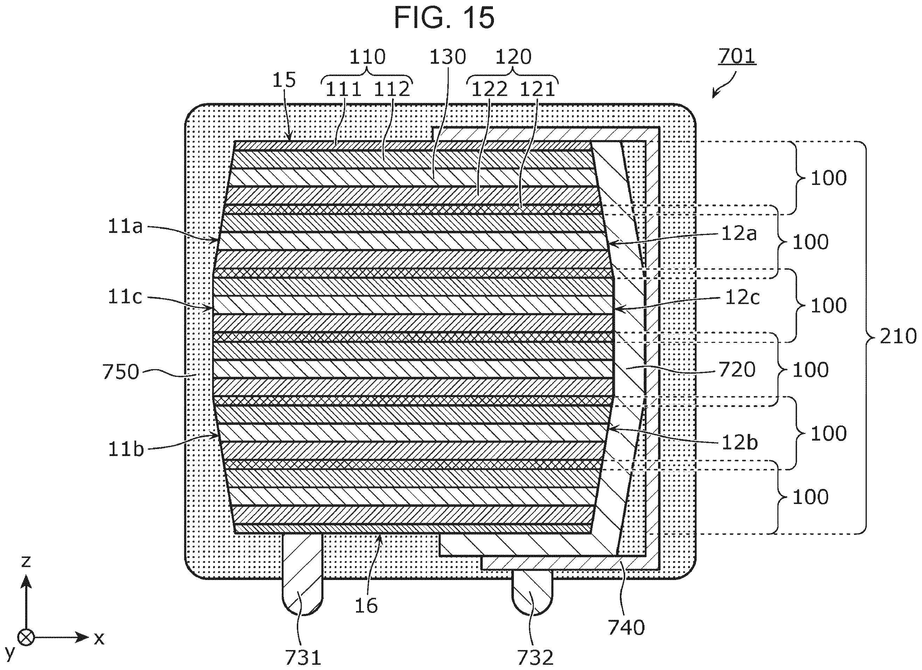

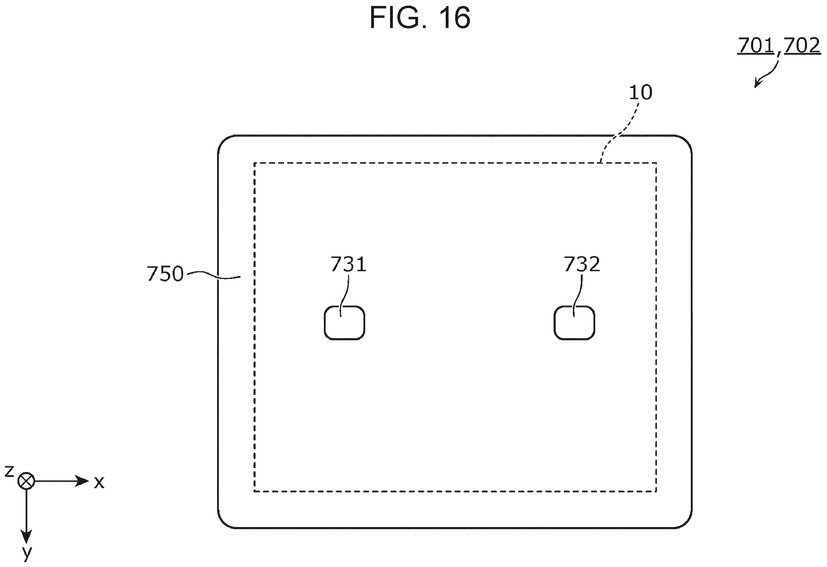

Fig. 15 is a sectional view of a battery 701 according to Embodiment 7. Fig. 16 is a bottom view of the battery 701 according to Embodiment 7. Fig. 15 corresponds to Fig. 1A and illustrates a section parallel to the x-z plane.

As illustrated in Fig. 15, the battery 701 includes the power generation element 210, an insulating member 720, a counter electrode extraction terminal 731, an electrode extraction terminal 732, a conducting member 740, and a sealing member 750. The power generation element 210 is the same as that of Embodiment 3 and includes plurality of unit cells 100 that are laminated on top of each other and are coupled in series.

The insulating member 720 is provided between the power generation element 210 and the conducting member 740. In the example illustrated in Fig. 15, the insulating member 720 coats the side surface 12 and a part of the principal 16. Specifically, the insulating member 720 coats the side surface 12 of the power generation element 210 from the upper to lower end of the power generation element 210 and extends onto the principal 16.

The insulating member 720 is made of an insulating material having electrical insulation properties. For example, the insulating member 720 contains resin. The resin is, but not limited to, for example, epoxy resin. The insulating material can be an inorganic material. The insulating material that can be used is selected based on various properties, including flexibility, gas barrier properties, impact resistance, and heat resistance. The insulating member 720 may be made of plurality of different materials.

The conducting member 740 is coupled to the counter electrode layer 120 positioned at the electrode layer 110 and is arranged along the insulating member 720. Specifically, the conducting member 740 covers the principal 15 of the power generation element 210 and is coupled to the electrode current collector 111 that is positioned at the upper end of the power generation element 210. The conducting member 740 is coupled to the electrode extraction terminal 732, which is arranged in the principal 16 of the power generation element 210.

In the side surface 12 of the power generation element 210, the conducting member 740 is not in contact with the electrode active material layers 112, the solid electrolyte layers 130, the counter electrode active material layers 122, the bipolar current collectors 140, and the counter electrode current collector 121 at the lower end. This can prevent short circuits of the power generation element 210.

The conducting member 740 is made of a conductive resin material or the like. Alternatively, the conducting member 740 may be made of a metal material, such as solder. The conductive material that can be used is selected based on various properties, including flexibility, gas barrier properties, impact resistance, heat resistance, and solder wettability. There may be a gap between the conducting member 740 and the insulating member 720.

The counter electrode extraction terminal 731 is arranged on the principal 16 and is coupled to the counter electrode current collector 121 of the lower end. The counter electrode extraction terminal 731 is one of the external connection terminals of the battery 701 and in Embodiment 7, is a terminal for extracting the positive electrode.

The electrode extraction terminal 732 is coupled to the electrode current collector 111 at the upper end of the power generation element 210 with the conducting member 740 interposed therebetween. The electrode extraction terminal 732 is one of the external connection terminals of the battery 701 and in Embodiment 7, is a terminal for extracting the negative electrode. As illustrated in Fig. 15, the electrode extraction terminal 732 is arranged in the principal 16 of the power generation element 210 with the insulating member 720 interposed therebetween.

The counter electrode extraction terminal 731 and the electrode extraction terminal 732 are each made of a conductive material. For example, the counter electrode extraction terminal 731 and the electrode extraction terminal 732 are each a metal foil or a metal plate made of metal such as copper, aluminum, and stainless. Alternatively, the counter electrode extraction terminal 731 and the electrode extraction terminal 732 may be cured solder.

As described above, in Embodiment 7, the counter electrode extraction terminal 731 and the electrode extraction terminal 732 are provided for the same principal 16 of the power generation element 210. This allows the battery 701 to be mounted compactly. For example, connection terminal patterns (also referred to as foot print) formed on the mounting substrate can be reduced in size. Furthermore, the battery 701 can be mounted with the principal 16 arranged in parallel to the mounting substrate. This can implement low-profile mounting on the mounting substrate. The mounting can uses reflow soldering or the like. Thus, the battery 701 has excellent mountability.

The sealing member 750 seals the power generation element 210 while at least a part of each of the counter electrode extraction terminal 731 and the electrode extraction terminal 732 is exposed. The sealing member 750 is provided so that for example, the power generation element 210, the insulating member 720, and the conducting member 740 are not exposed. As illustrated in Fig. 15, only the counter electrode extraction terminal 731 and the electrode extraction terminal 732 are exposed in the bottom surface of the battery 701.

The sealing member 750 is made of, for example, an insulating material having electrical insulation properties. The insulating material can be a publicly-known sealing member material for batteries, for example, such as a sealant. The insulating material can be, for example, a resin material. The insulating material may be a material having insulation properties but not ion conductivity. For example, the insulating material may be at least one of epoxy resin, acrylic resin, polyimide resin, and silsesquioxane.

The sealing member 750 may contain plurality of different insulating materials. For example, the sealing member 750 may have a multilayer structure. The layers of the multilayer structure may be made of different materials and have different properties.

The sealing member 750 may contain a particulate metal oxide material. The metal oxide material can be silicon oxide, aluminum oxide, titanium oxide, zinc oxide, cerium oxide, iron oxide, tungsten oxide, zirconium oxide, calcium oxide, zeolite, glass, or the like. For example, the sealing member 750 may be made of a resin material in which plurality of particles made of the metal oxide material are dispersed.

The particle size of the metal oxide material needs to be smaller than or equal to the distance between the electrode current collector 111 and the counter electrode current collector 121 of each unit cell 100. The particle shape of the metal oxide material is, but not limited to, for example, a sphere, an oval sphere, a rod-like shape, or the like.

Providing the sealing member 750 can enhance the reliability of the battery 701 in various terms, including mechanical strength, short-circuit prevention, and moisture-proof property.

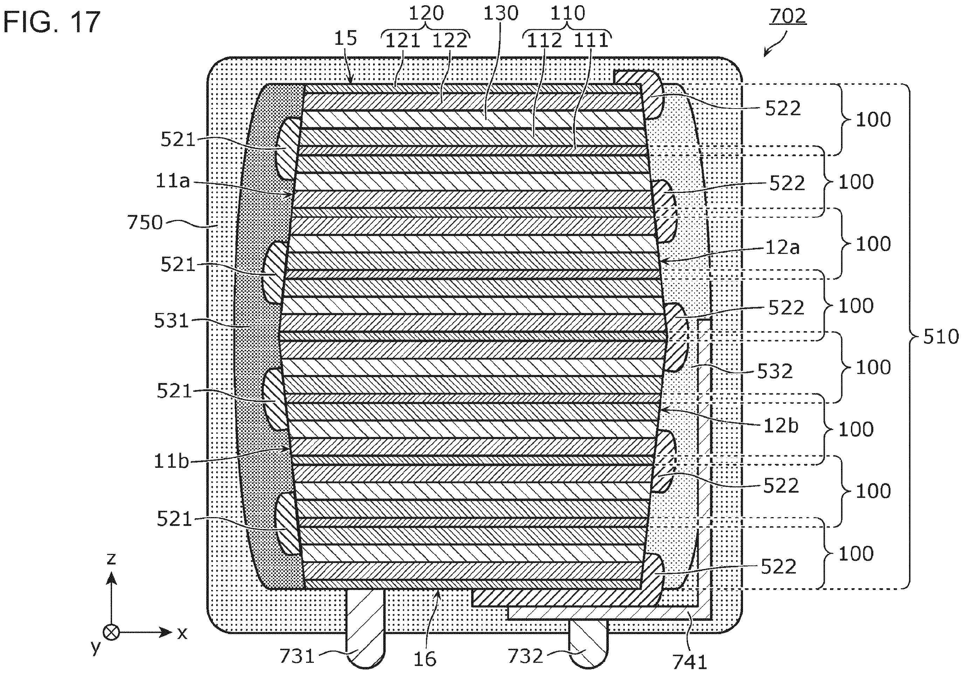

The battery 701 may include the power generation element 10 instead of the power generation element 210. A battery according to Embodiment 7 may include the power generation element 510 having plurality of unit cells 100 that are laminated on top of each other and are coupled in parallel like the battery 702, which is illustrated in Fig. 17.

Fig. 17 is a sectional view of a battery 702 according to another example of Embodiment 7. As illustrated in Fig. 17, the battery 702 includes the power generation element 510, the electrode insulating layers 521, the counter electrode insulating layers 522, the counter electrode extraction part 531, the electrode extraction part 532, the counter electrode extraction terminal 731, the electrode extraction terminal 732, and a conducting member 741.

In the battery 702, the side surfaces 11 and 12 of the power generation element 510 are provided with the counter electrode extraction part 531 and the electrode extraction part 532, respectively. The conducting member 741 does not need to be coupled to the principal 15 and is coupled to the electrode extraction part 532. To avoid contact between the conducting member 741 and the principal 16, a part of the counter electrode insulating layer 522 coats the principal 16. This can prevent short circuits of the battery 702 due to contact between the conducting member 741 and the counter electrode layer 120.

The battery 702 may include the power generation element 511, which is illustrated in Fig. 14, instead of the power generation element 510. In Embodiment 7, the battery 701 or 702 do not need to include the sealing member 750.

### (Embodiment 8)

Next, Embodiment 8 will be described.

In Embodiment 8, a circuit substrate having the same configuration as the batteries according to the aforementioned embodiments will be described. The following description will be mainly given of differences from each embodiment, and the description of the same configurations will be omitted or simplified.

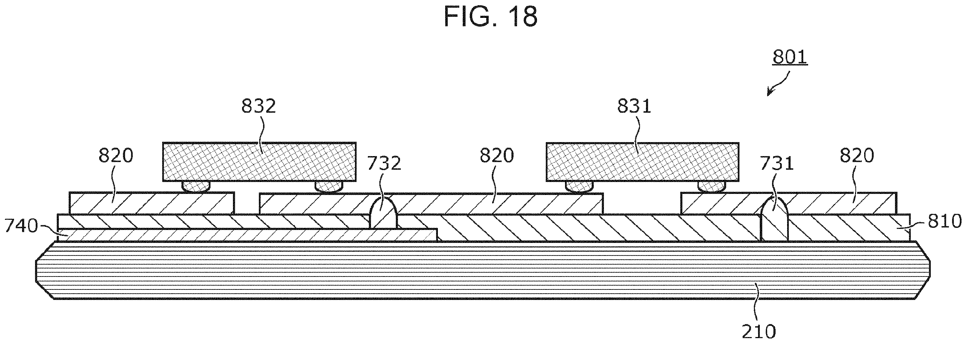

Fig. 18 is a sectional view of a circuit substrate 801 according to Embodiment 8. As illustrated in Fig. 18, the circuit substrate 801 is, for example, a mounting substrate on which electronic devices 831 and 832 are to be mounted. The electronic devices 831 and 832 are chip members, for example, such as a resistor, a capacitor, an inductor, or a semiconductor integrated circuit. The number of electronic devices to be mounted on the circuit substrate 801 is not limited.

The circuit substrate 801 includes the power generation element 210, an insulating layer 810, and a circuit pattern layer 820.

The power generation element 210 is, for example, the power generation element 210, which is illustrated in Figs. 7A and 7B. The circuit substrate 801 may include the power generation element 10, 510, or 511 instead of the power generation element 210. When the circuit substrate 801 includes the power generation element 510 or 511, the circuit substrate 801 may include the electrode insulating layers 521, the counter electrode insulating layers 522, the counter electrode extraction part 531, and the electrode extraction part 532. Fig. 18 does not illustrate the detail structure of the power generation element 210 for easy visibility.

The insulating layer 810 is arranged between the power generation element 210 and the circuit pattern layer 820. In the example illustrated in Fig. 18, the insulating layer 810 is, but not limited to, of the same size as the power generation element 210. The insulating layer 810 may be either smaller or larger than the power generation element 210.

The insulating layer 810 is made of an insulating material and can be, for example, a general insulating member for substrates, such as an insulating film or an insulating plate. The insulating layer 810 may be a coating layer formed by applying an insulating material on the power generation element 210. The insulating layer 810 may be a part of the sealing member 750.

In Embodiment 8, the circuit substrate 801 includes the counter electrode extraction terminal 731 and the electrode extraction terminal 732. The counter electrode extraction terminal 731 and the electrode extraction terminal 732 individually penetrate the insulating layer 810 and are coupled to the circuit pattern layer 820. Fig. 18 schematically illustrates the conducting member 740. The conducting member 740 is coupled to the electrode current collector 111 in the principal 15 of the power generation element 210 as illustrated in Fig. 15, though not illustrated in Fig. 18.

The circuit pattern layer 820 is laid on the power generation element 210. Specifically, the circuit pattern layer 820 is arranged on the principal 15 or 16 of the power generation element 210 with the insulating layer 810 interposed therebetween.

The circuit pattern layer 820 includes plurality of wires. The plurality of wires are formed in a predetermined shape using a conductive material, such as copper. The shape of wires is properly adjusted depending on the arrangement and shapes of the electronic devices 831 and 832 and the like.

The plurality of wires are coupled to the counter electrode extraction terminal 731 and the electrode extraction terminal 732. Electric power generated by the power generation element 210 can thereby be supplied to the electronic devices 831 and 832 through the wires. Alternatively, the power generation element 210 can be charged through the wires.

The circuit substrate 801 having charge and discharge functions can be implemented as described above. In other words, an all-solid-state battery can be used as a substrate, and the electronic devices 831 and 832 can be implemented on the all-solid-state battery. This allows for integration of a wiring substrate and a battery, thus implementing miniaturization and thinning of electronic equipment. The circuit substrate 801 includes inclined surfaces that connect to the respective principals 15 and 16 in the side surface in a similar manner to the batteries according to the aforementioned embodiments. Thus, the reliability can be enhanced.

Furthermore, electric power can be directly supplied from the circuit substrate 801. This can reduce wiring and prevent radiated emission from wires. In addition, the current collectors of the circuit substrate 801 can be configured to function as a shield layer for noise prevention. Using the circuit substrate 801 as a substrate for electronic equipment as described above can stabilize the operation of the electronic equipment. For example, the circuit substrate 801 is used in high-frequency equipment susceptible to radiated emission.

### (Manufacturing Method)

Next, a method for manufacturing a battery according to each embodiment described above will be described.

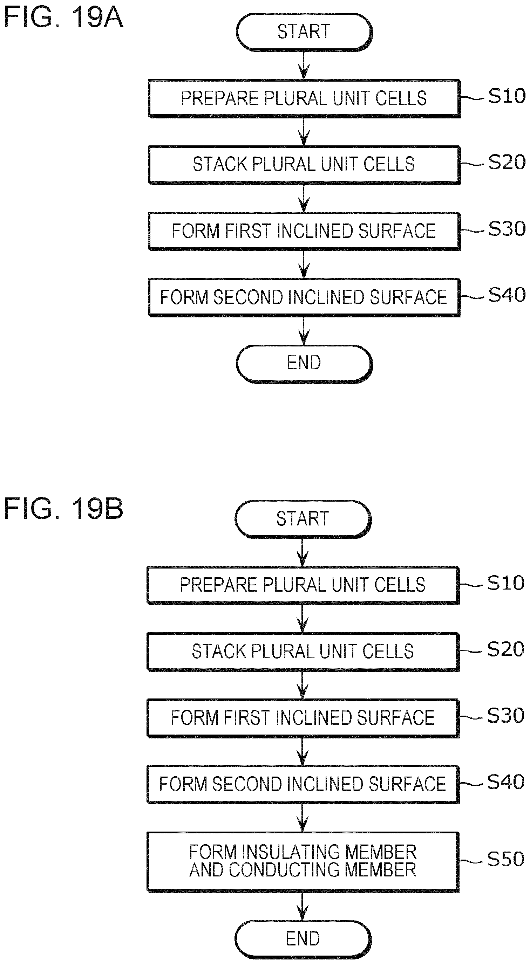

Fig. 19A is a flowchart illustrating an example of the method for manufacturing a battery according to each embodiment. The following description will be given of the method for manufacturing the battery 1 according to Embodiment 1 by way of example.

As illustrated in Fig. 19A, first, plurality of unit cells are prepared (S10). The prepared unit cells are, for example, the unit cells 100A, 100B, and 100C, which are illustrated in Figs. 3A to 3C.

Next, the plurality of unit cells 100 are laminated on top of each other (S20). Specifically, the plurality of unit cells 100 are sequentially laminated to form a laminate such that the electrode layer 110, the counter electrode layer 120, and the solid electrolyte layer 130 in each unit cell are arranged in the same order. In the present embodiment, the unit cells 100A, 100B, and 100C are properly combined and laminated. This results in a laminate equivalent to the power generation element 10, which is illustrated in Fig. 1A. In the resulting laminate, the plurality of unit cells 100 are coupled in series.

After the plurality of unit cells 100 are laminated, then, the first inclined surfaces connecting to the principal 15 of the power generation element 10 are formed in the side surfaces of the power generation element 10 (S30). Specifically, the inclined surfaces 11a, 12a, 13a, and 14a are formed in the side surfaces 11, 12, 13, and 14 of the power generation element 10, respectively. The first inclined surfaces are formed by, for example, a cutting process. The cutting process is performed with a blade, a laser beam, a jet, or the like. For example, the edges on the principal 15 side are cut off diagonally to the laminating direction across plurality of unit cells 100 to form inclined surfaces each forming an obtuse angle with the principal 15.

Next, the second inclined surfaces coupled to the principal 16 of the power generation element 10 are formed in the side surfaces of the power generation element 10 (S40). Specifically, the inclined surfaces 11b, 12b, 13b, and 14b are formed in the side surfaces 11, 12, 13, and 14 of the power generation element 10, respectively. The method of forming the second inclined surfaces is the same as the method of forming the first inclined surfaces.

The battery 1, which is illustrated in Figs. 1A and 1B, is manufactured by the aforementioned process.

The manufacturing method may include a step of individually pressing the plurality of unit cells 100 prepared in the step S10 or pressing the laminate of the plurality of unit cells 100 in the laminating direction.

Before the formation of the inclined surfaces (S30) or after the formation of the inclined surfaces (S40), the side surfaces of the power generation element 10 may be flattened. For example, the laminate of the plurality of unit cells 100 may be cut vertically together to form the power generation element 10 with flat side surfaces. By cutting the side surfaces vertically, the battery 201, which is illustrated in Figs. 7A and 7B, can be manufactured, for example.

After the formation of the inclined surfaces (S40), the insulating member coating the side surfaces may be formed. For example, the insulating member is formed by applying and curing a flowable resin material. The application is performed by ink jetting, spraying, screen printing, gravure printing, or the like. The curing is performed by drying, heating, light irradiation, or the like depending on the resin material to be used. The batteries 301, 302, and 303, which are illustrated in Figs. 8 to 10, can thereby be manufactured.

In the laminating of the unit cells 100 (S20), the unit cells 100 may be laminated such that the order of the electrode layer 110, the counter electrode layer 120, and the solid electrolyte layer 130 in each unit cell 100 is opposite to the order in the unit cell 100 adjacent thereto. This results in a laminate equivalent to the power generation element 510, which is illustrated in Fig. 12A. In the resulting laminate, the plurality of unit cells 100 are easily coupled in parallel in the side surface of the laminate. The battery 501 including the power generation element 510 is manufactured, for example, according to the manufacturing method illustrated in Fig. 19B.

Specifically, as illustrated in Fig. 19B, the steps (S10 to S40) until the inclined surfaces are formed are the same as those of the manufacturing method illustrated in Fig. 19A. After the formation of the inclined surfaces, the insulating members and the conducting members are formed on the side surfaces of the power generation element 510 (S50). Specifically, the electrode insulating layers 521, which cover the electrode layers 110, are formed on the side surface 11. The counter electrode insulating layers 522, which cover the counter electrode layers 120, are formed on the side surface 12.

The electrode insulating layers 521 and the counter electrode insulating layers 522 are formed by, for example, applying and curing a flowable resin material. The application is performed by ink jetting, spraying, screen printing, gravure printing, or the like. The curing is performed by drying, heating, light irradiation, or the like depending on the resin material to be used.

The formation of the electrode insulating layers 521 and the counter electrode insulating layers 522 may include a process of forming a protection member by masking with tape or the like or resist processing for a region where the insulating layers must not be formed in order to prevent the end surfaces of the counter electrode current collectors 121 and the end surfaces of the electrode current collectors 111 from being insulated. After the formation of the electrode insulating layers 521 and the counter electrode insulating layers 522, the protection member is removed. This can ensure the conduction of each current collector.

After the electrode insulating layers 521 and the counter electrode insulating layers 522 are formed, the counter electrode extraction part 531, which is electrically coupled to the plurality of counter electrode layers 120, is formed so as to cover the side surface 11 and the electrode insulating layers 521. The electrode extraction part 532, which is electrically coupled to the plurality of electrode layers 110, is formed so as to cover the side surface 12 and the counter electrode insulating layers 522.

For example, the counter electrode extraction part 531 is formed by applying and curing a conductive paste, such as conductive resin, so as to cover the electrode insulating layers 521 and the portions not covered with the electrode insulating layers 521 in the side surface 11. The electrode extraction part 532 is arranged by applying and curing conductive resin so as to cover the counter electrode insulating layers 522 and the portions not covered with the counter electrode insulating layers 522 in the side surface 12. The counter electrode extraction part 531 and the electrode extraction part 532 may be formed by, for example, printing, plating, vapor deposition, sputtering, welding, soldering, bonding, or another method.

The battery 501, which is illustrated in Figs. 12A and 12B, can be manufactured by the aforementioned process.

After the formation of the inclined surfaces (S40), the counter electrode current collector terminal 431 and the electrode current collector terminal 432, which are coupled to the power generation element 10 or 210, may be formed. In the case of the power generation element 510 or 511, after the formation of the counter electrode extraction part 531 and the electrode extraction part 532, the counter electrode current collector terminal 631 or 633 and the electrode current collector terminal 632 or 634 may be formed. For example, the counter electrode current collector terminal 431, 631, or 633 and the electrode current collector terminal 432, 632 or 634 are formed by welding or bonding metal plates or the like.

After the current collector terminals are coupled, the power generation element may be sealed within the flexible container 450. For example, the power generation element is arranged within the flexible container 450 in reduced pressure space, and the edges of the flexible container 450 are welded for sealing with the insulating sealing sleeves 440 interposed therebetween. Thus, the battery 401, which is illustrated in Figs. 11A and 11B, the battery 601, which is illustrated in Figs. 13A and 13B, or the battery 602, which is illustrated in Fig. 14, can be manufactured.

Furthermore, the counter electrode extraction terminal 731 and the electrode extraction terminal 732 may be formed in a principal of the power generation element. The counter electrode extraction terminal 731 and the electrode extraction terminal 732 are formed by arranging a conductive material, such as metal, in a desired region by plating, printing, soldering, or the like. Alternatively, the counter electrode extraction terminal 731 and the electrode extraction terminal 732 may be formed by welding or bonding metal plates or the like.

Before the formation of the electrode extraction terminal 732, the insulating member 720 and the conducting member 740 are formed. The insulating member 720 is formed by, for example, applying and curing a flowable resin material. The conducting member 740 is formed by, for example, printing, plating, vapor deposition, sputtering, welding, soldering, bonding, or another process.

After the formation of the extraction terminals, the sealing member 750, which is illustrated in Figs. 15 to 17, may be formed. The sealing member 750 is formed by, for example, applying and curing a flowable resin material. The application is performed by ink jetting, spraying, screen printing, gravure printing, or the like. The curing is performed by drying, heating, light irradiation, or the like depending on the resin material to be used.

### (Other Embodiment)

Hereinabove, the batteries, the manufacturing methods of the batteries, and the circuit substrates according to one or plurality of aspects are described based on the embodiments. The present disclosure is not limited to those embodiments. The present disclosure includes modes obtained by applying various modifications conceivable by those skilled in the art to the present embodiments and modes obtained by combining constituent elements of different embodiments without departing from the spirit of the present disclosure.

For example, in the examples illustrated in the aforementioned embodiments, the first inclined surfaces and the second inclined surfaces are provided along the entire circumference of the principal 15 or 16 of the power generation element 10. However, the present disclosure is not limited thereto. For example, either the first inclined surfaces or the second inclined surfaces, or both may be provided along two or more sides of the polygonal principal 15 or 16. For example, among the side surfaces 11, 12, 13, and 14, only two side surfaces opposite to each other or only two adjacent side surfaces may include either the first inclined surfaces or the second inclined surfaces, or both. Alternatively, at least one of the first inclined surfaces and the second inclined surfaces may be provided along only one side of the polygonal principal 15 or 16. For example, only one of the side surfaces 11, 12, 13, and 14 may include the first inclined surface and the second inclined surface.

The first inclined surfaces do not need to be included in the same side surfaces as the second inclined surfaces, for example. For example, the side surface 11 may include the first inclined surface while not including the second inclined surface, and the side surface 12, 13, or 14 may include the second inclined surface while not including the first inclined surface.

In any of the aforementioned cases, the power generation element can properly support external forces applied from below and above, compared to the case where the power generation element does not include any inclined surface. It is thus possible to prevent edges of the power generation element from collapsing and ensure sufficient insulation distances. This can enhance the reliability of the battery.

The aforementioned embodiments can be subjected to various changes, substitutions, additions, and omissions within the scope of claims or the equivalents thereto.

### Industrial Applicability

The present disclosure can be used as batteries of, for example, electronic equipment, electric apparatuses, and electric vehicles.

### Reference Signs List

1, 201, 301, 302, 303, 401, 501, 601, 602, 701, 702 battery
10, 210, 510, 511 power generation element
11, 12, 13, 14 side surface
11a, 11b, 12a, 12b, 13a, 13b, 14a, 14b inclined surface
11c, 12c, 13c, 14c end surface
15, 16 principal
100, 100a, 100b, 100c unit cell
110, 110b electrode layer
111 electrode current collector
112 electrode active material layer
120, 120c counter electrode layer
121 counter electrode current collector
122 counter electrode active material layer
130 solid electrolyte layer
140 bipolar current collector
320, 321, 322, 720 insulating member
431, 631, 633 counter electrode current collector terminal
432, 632, 634 electrode current collector terminal
440 insulating sealing sleeve
450 flexible container
521 electrode insulating layer
522 counter electrode insulating layer
531 counter electrode extraction part
532 electrode extraction part
731 counter electrode extraction terminal
732 electrode extraction terminal
740, 741 conducting member
750 sealing member
801 circuit substrate
810 insulating layer
820 circuit pattern layer
831, 832 electronic device

## Claims

1. A battery, comprising:
a power generation element including a plurality of unit cells which are laminated, wherein
each of the plurality of unit cells includes an electrode layer, a counter electrode layer, and a solid electrolyte layer arranged between the electrode layer and the counter electrode layer,
the power generation element includes:
a first principal;
a second principal opposite to the first principal; and
a side surface connecting the first principal and the second principal,
the side surface includes:
a first inclined surface that connects to the first principal and forms an obtuse angle with the first principal; and
a second inclined surface that connects to the second principal and forms an obtuse angle with the second principal, and
at least one of the first inclined surface and the second inclined surface is provided across two or more of the plurality of unit cells.

2. The battery according to claim 1, wherein the side surface includes a surface perpendicular to the first principal or the second principal.

3. The battery according to claim 1 or 2, wherein the shape of the power generation element in a section perpendicular to the first principal, the second principal, and the side surface is an octagon.

4. The battery according to claim 1, wherein the shape of the power generation element in a section perpendicular to the first principal, the second principal, and the side surface is a hexagon.

5. The battery according to any one of claims 1 to 4, wherein
the first principal and the second principal are polygonal in plan view, and
at least one of the first inclined surface and the second inclined surface is provided along two or more sides of the first principal or the second principal.

6. The battery according to any one of claims 1 to 5, wherein
at least one of the first inclined surface and the second inclined surface is provided along the entire circumference of the first principal or the second principal.

7. The battery according to any one of claims 1 to 6, further comprising an extraction terminal provided for the first principal or the second principal.

8. The battery according to any one of claims 1 to 7, further comprising an insulating member coating the side surface.

9. The battery according to claim 8, wherein the insulating member contains resin.

10. The battery according to claim 8 or 9, wherein the insulating member has a coating thickness smaller than or equal to the thickness of the power generation element.

11. The battery according to any one of claims 8 to 10, wherein a part of the insulating member is positioned outside a thickness range of the power generation element.

12. The battery according to any one of claims 8 to 11, wherein the insulating member coats the first principal or the second principal.

13. The battery according to any one of claims 1 to 12, wherein the plurality of unit cells are electrically coupled in series.

14. The battery according to any one of claims 1 to 12, wherein the plurality of unit cells are electrically coupled in parallel.

15. The battery according to claim 14, further comprising:
an electrode insulating member covering the electrode layer of each of the plurality of unit cells in a first region of the side surface;
a counter electrode extraction part that covers the electrode insulating member and is electrically coupled to the counter electrode layer of each of the plurality of unit cells;
a counter electrode insulating member covering the counter electrode layer of each of the plurality of unit cells in a second region of the side surface; and
an electrode extraction part that covers the counter electrode insulating member and is electrically coupled to the electrode layer of each of the plurality of unit cells.

16. The battery according to claim 15, further comprising:
a flexible container;
an electrode current collector terminal electrically coupled to the electrode layer of each of the plurality of unit cells; and
a counter electrode current collector terminal electrically coupled to the counter electrode layer of each of the plurality of unit cells, wherein
the power generation element is sealed within the flexible container,
the electrode current collector terminal is in contact with the electrode extraction part, the first principal, or the second principal and extends out of the flexible container, and
the counter electrode current collector terminal is in contact with the counter electrode extraction part, the first principal, or the second principal and extends out of the flexible container.

17. The battery according to any one of claims 1 to 15, further comprising
a flexible container, wherein
the power generation element is sealed within the flexible container.

18. The battery according to claim 16 or 17, wherein the flexible container is a moisture-proof laminated bag.

19. A method for manufacturing a battery, comprising the steps of:
forming in a side surface of a power generation element including a plurality of unit cells which are laminated, a first inclined surface connecting to a first principal of the power generation element; and
forming in the side surface of the power generation element, a second inclined surface connecting to a second principal opposite to the first principal, wherein
the first inclined surface forms an obtuse angle with the first principal,
the second inclined surface forms an obtuse angle with the second principal, and
at least one of the first inclined surface and the second inclined surface is provided across two or more of the plurality of unit cells.

20. A circuit substrate, comprising:
a power generation element including a plurality of unit cells which are laminated; and
a circuit pattern layer laid on the power generation element, wherein
each of the plurality of unit cells includes an electrode layer, a counter electrode layer, and a solid electrolyte layer arranged between the electrode layer and the counter electrode layer,
the power generation element includes:
a first principal;
a second principal opposite to the first principal; and
a side surface connecting the first principal and the second principal,
the side surface includes:
a first inclined surface that connects to the first principal and forms an obtuse angle with the first principal, and
a second inclined surface that connects to the second principal and forms an obtuse angle with the second principal, and
at least one of the first inclined surface and the second inclined surface is provided across two or more of the plurality of unit cells.
